(19) Europäisches Patentamt European Patent Office Office européen des brevets

(11) **EP 1 898 060 A1**

(12) **EUROPEAN PATENT APPLICATION**

(43) Date of publication:
**12.03.2008 Bulletin 2008/11**

(51) Int Cl.:
***F01N 3/027*** *(2006.01)*

(21) Application number: **07017598.9**

(22) Date of filing: **07.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.09.2006 JP 2006242357**

(71) Applicant: **Nissin Electric Co., Ltd.**
**Kyoto-shi,**
**Kyoto 615-8686 (JP)**

(72) Inventors:
• **Naito, Kenta**
**Kyoto-shi**
**Kyoto, 615-8686 (JP)**
• **Senbayashi, Satoru**
**Kyoto-shi**
**Kyoto, 615-8686 (JP)**
• **Hamada, Yuichi**
**Kyoto-shi**
**Kyoto, 615-8686 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Particulate matter removal apparatus**

(57)    A filter is made with heat-insulating ceramic fibers, and where the filter is increased in pressure loss due to particulate matter captured after filtration of exhaust gas, gas flow is blocked, a heating element is used to heat the surface of the filter, thereby burning and removing particulate matter. The filter is of heat insulating properties, by which a heat insulating material is arranged near the particulate matter capturing face of the filter, and the heating element is incorporated between the surface of the filter and the heat insulating material. The filter can be regenerated at a higher heating efficiency in a smaller quantity of thermal energy. The heat insulating material is also used as a filter, by which the apparatus can be made more compact. A charging element is arranged upstream of the filter material, by which the filter material is increased in particulate matter capturing performance, thereby suppressing the rate of increase in the pressure loss and improving heating efficiency of particulate matter.

*FIG. 1*

**Description**

This application claims priority to Japanese Patent Application No. 2006-242357, filed September 7, 2006, in the Japanese Patent Office. The priority application is incorporated by reference in its entirety.

TECHNICAL FIELD

The present disclosure relates to an apparatus for capturing and removing particulate matter (PM) in gases exhausted from diesel engines, etc. Diesel engines, which have been widely used as engines for large vehicles, are driven by using light oil or heavy oil as fuel and are highly fuel efficient. Diesel engines are not provided with an ignition spark plug unlike a gasoline engine. The diesel engine is higher in compression ratio, causing ignition by blowing a mist of compressed light oil or heavy oil into the engine. Diesel engines are advantageous, for example, high in thermal efficiency, large in displacement volume, great in power and long in service period.

However, exhaust gases from diesel engines are responsible for serious environmental pollution. One disadvantage is the exhaust of nitrogen oxides Nox. Another disadvantage is that the exhaust gases contain unburned substances (mainly carbon microparticles). A quantity of exhaust gases varies, depending on a ratio of air to fuel. Nitrogen oxides increase with an increase in air, and exhausted unburned substances (particulate matter: PM) increase with a decrease in air. In this instance, the term particulate matter (PM) contained in exhaust gases means combustible particulate matter, which is mainly unburned carbon microparticles. Carbon microparticles remain, thereby making exhaust gases blackish.

In order to reduce unburned substances, air is supplied in an increased quantity. If so supplied, nitrogen oxides will increase, and there is a limitation to this. Thus, carbon is inevitably contained in exhaust gases from a diesel engine. Since carbon is contained in exhaust gases, it is necessary to release the gases into the atmosphere after the thus contained carbon is removed.

Carbon exists as microparticle solids in exhaust gases. When exhaust gases are allowed to pass through a finely meshed filter, particulate matter (mainly carbon microparticles) can be filtered and removed. Particulate matter accumulates on the filter. This process is called clarification of exhaust gases. It is impossible to keep particulate matter accumulated on the filter for a long time. Pressure loss is increased to result in a difficult passage of gases through the filter. Therefore, when particulate matter accumulates to some extent, particulate matter must be removed from the filter. Carbon is a main component of particulate matter and can be burned. When carbon is burned, it is changed into carbon dioxide, which is favorable. Therefore, when particulate matter is accumulated to some extent, it is burned and removed. This is called filter regeneration.

When air is newly supplied from the outside at the time of burning carbon, a filter, carbon particles and the atmosphere are lowered in temperature, and a great amount of heating energy is required to compensate. Then, when captured carbon is burned, air is not supplied from the outside but oxygen contained in high-temperature exhaust gases is utilized. Thus, there is no drop in temperature due to the introduction of gases. Since exhaust gases are those generated after burning, it is likely that oxygen is not present. However, it is not true in reality. Exhaust gases contain oxygen at approximately 5 to 10%. Remaining oxygen is used to burn and remove carbon, thereby making it possible to save heating energy.

RELATED ART

An apparatus which utilizes filters composed of ceramic honeycomb structures and filters composed of ceramic fibers is known as an apparatus for removing particulate matter contained in gases exhausted from a diesel engine. Both the ceramic honeycomb filters and the ceramic-fiber filters are those in which exhaust gases are allowed to pass through the filters, thereby removing particulate matter by capturing and removing particulate matter on fine pores and meshes (filtration). When particulate matter (carbon particles, etc.) is accumulated to some extent, particulate matter is burned to give carbon dioxide, which is then released into the atmosphere.

Patent Document 1: Japanese Published Unexamined Patent Application No. 2005-337153
Patent Document 2: Japanese Published Unexamined Patent Application No. H08-312329

Patent Document 1 has disclosed a filter composed of ceramic honeycomb structures in which particulate matter is filtered through a honeycomb wall surface having breathable porous structures. Particulate matter trapped by the honeycomb wall surface is oxidized, burned and removed by heating gases at a high temperature temporarily. Proposed as heating and burning means are those in which fuel is sprayed on an oxidation catalyst to effect burning, and an electric heater is used to carry out heating and burning.

Patent Document 2 has disclosed a ceramic fiber filter in which a woven fabric made with breathable thin fabric-like and high heat-resistant silicon carbide ceramic fibers is formed in a pleated manner to filter particulate matter.

Patent Document 2 has disclosed a filter in which particulate matter trapped by ceramic fibers is oxidized, burned and removed through heating by an electric heater arranged so as to hold the ceramic fibers.

A filter having ceramic honeycomb structures described in Patent Document 1 is high in density and high in capturing efficiency of particulate matter (carbon particles). However, ceramic honeycomb filters are expensive and cannot be readily replaced when they are damaged. Therefore, filters require high durability so as not to be damaged. Since the ceramic honeycomb filter has a great number of hard wall surfaces, there is a case where the filter may be cracked or melted due to intensive thermal stress or localized heating at the time of heating, burning and removing the thus trapped particulate matter. In preventing the above damage of ceramic honeycomb filters, it is necessary to monitor the state of gases, estimate the status of particulate matter captured by the filter and make a complicated linkage with the control of the engine, thereby making it quite difficult to handle the filter, which is a problem.

A filter composed of ceramic fibers which has been described in Patent Document 2 is made with soft fibers. No problem is found that the filter is cracked by thermal stress or localized heating. In this respect, the filter is easy to handle. However, a related-art ceramic fiber filter is disadvantageous in that the capturing efficiency of particulate matter is lower than a filter composed of ceramic honeycomb structures. Further, the thus captured particulate matter is heated by an electric heater and oxidized, burned and removed, thereby necessitating greater electricity, which is another problem.

SUMMARY

Exemplary embodiments of the present invention provide a particulate matter removal apparatus which is excellent in durability and significantly reduces electricity consumed for heating, burning and removing the thus captured particulate matter.

[First invention (filter/heater/heat insulating material)]

A first invention of the particulate matter removal apparatus is provided with a breathable filter material composed of heat-insulating ceramic fibers, a heat insulating material so as to be in close proximity to the particulate matter capturing face of the breathable filter material, a heating element arranged between the breathable filter material and the heat insulating material to heat, burn and remove particulate matter, and an on-off valve for operating the inflow of gases into the breathable filter material, in which when the on-off valve is opened, the breathable filter material is not heated but the breathable filter material is allowed to capture particulate matter, and when the on-off valve is closed and the breathable filter material is restricted for inflow of gases, the breathable filter material is heated by the heating element to burn and remove particulate matter captured by the breathable filter material.

The heat insulating material is arranged in such a way as to be in close proximity to the particulate matter capturing face of the breathable filter material, by which the particulate matter capturing face of the breathable filter material is increased in heating efficiency due to the heating element and particulate matter captured by the breathable filter material can be burned and removed in a smaller quantity of thermal energy.

[Second invention (filter/heater/filter)]

A second invention of the particulate matter removal apparatus is provided with a breathable filter material composed of heat-insulating ceramic fibers, a heating element for heating, burning and removing particulate matter captured by the breathable filter material and an on-off valve for operating the inflow of gases into the breathable filter material, in which two or more of breathable filter materials are arranged in close proximity, with the particulate matter capturing faces opposing each other, the heating element is arranged between the particulate matter capturing faces of the breathable filter materials arranged in close proximity, when the on-off valve is opened, the breathable filter material is not heated but the breathable filter material is allowed to capture particulate matter, and when the on-off valve is closed and the breathable filter material is restricted for inflow of gases, the breathable filter material is heated by the heating element to burn and remove particulate matter captured by the breathable filter material.

Heat-insulating breathable filter materials are arranged in close proximity in such a way that the particulate matter capturing faces oppose each other, by which the heating element is increased in heating efficiency of the particulate matter capturing face of the breathable filter material, and particulate matter captured by the breathable filter material can be burned and removed in a smaller quantity of thermal energy.

[Third invention (electrical charge + filtration)]

A third invention of the particulate matter removal apparatus is that in the particulate matter removal apparatus of the first or the second invention, a charging element is provided upstream on a breathable filter material for electrically charging particulate matter. Particulate matter in exhaust gases is in advance subjected to electrical charge, by which the breathable filter material is increased in particulate matter capturing efficiency. In addition, the rate of increase in the pressure loss of the filter material is suppressed.

Still further, it is possible to localize particulate matter captured by the breathable filter material on the upstream surface of the breathable filter material. Thereby, particulate matter is more efficiently burned by a heating element, thus making it possible to regenerate the breathable filter material in a smaller quantity of thermal energy.

[Fourth invention (restriction by pcd and k/d)]

A fourth invention of the particulate matter removal apparatus is that in the particulate matter removal apparatus of the first, second or third invention, a ratio of heat conductivity of heat-insulating breathable filter material k (unit, W/mK) to thickness d (unit, m), that is (the heat conductivity is divided by the thickness: k/d: unit, $W/m^2K$) is 50 $W/m^2K$ or less, more preferably 20 $W/m^2K$ or less, and a product of bulk density of breathable filter material $\rho$ (unit, $kg/m^3$), specific heat c (unit, J/kgK) and thickness d(unit, m), that is, $\rho cd$ (unit, $J/m^2K$), satisfies the following formula (1).

$$\rho cd \leq 600k/d[-\ln\{1-0.019(k/d)\}] \qquad (1)$$

More preferably, the product satisfies the following formula (2).

$$\rho cd \leq 600k/d[-\ln\{1-0.0475(k/d)\}] \qquad (2)$$

In this instance, pcd is a thermal capacity per unit area of filter, and k/d represents ease in conducting heat between the surface and the back face of a filter. Since heat insulation is important, difficulty in heat conduction is preferable. Therefore, ease in heat conduction is controlled by rendering the heat conduction difficult under conditions of $k/d \leq 50$ $W/m^2K$ or $k/d \leq 20$ $W/m^2K$.

Further, the above conditions are given to a thermal capacity, pcd, per unit area of filter, by which the filter is required to be small in thermal capacity. The filter is required to be difficult in heat conduction and low in thermal capacity.

[Fifth invention (use of biodegradable fibers in filter material)]

A fifth invention of the particulate matter removal apparatus is that in the particulate matter removal apparatus of the first, second, third or fourth invention, a breathable filter material is composed of biodegradable fibers primarily based on silicon dioxide (silica; $SiO_2$), magnesium oxide (magnesia; MgO) and calcium oxide (calcia; CaO).

[Sixth invention (a plurality of filter units, continuous clarification and cyclic regeneration)]

A sixth invention of the particulate matter removal apparatus is that in the particulate matter removal apparatus of the first, second, third, fourth or fifth invention, two or more combinations of an on-off valve and a breathable filter material are made and opening and closing actions of each of the on-off valves are controlled in such a way that at least one on-off valve is opened while gases are supplied. At least any one of the filter units is allowed to pass exhaust gases, and particulate matter is removed by the filter, thereby making it possible to clarify exhaust gases continuously.

An apparatus of the present invention is that heat-insulating breathable ceramic fibers are provided as a filter on a channel of exhaust gases, a heating element is provided in close proximity, thereby removing particulate matter (PM: carbon microparticles, etc.) contained in exhaust gases from a diesel engine.

Where a filter is clogged, gas flow is blocked, a heating element is used to heat the surface of the filter to burn and remove particulate matter, thereby regenerating the filter.

The present invention has features in which a heat-insulating filter is used, a heat insulating material is arranged in such a way as to be in close proximity to the particulate matter capturing face of the filter, and a heating element is incorporated between the surface of the filter and the heat insulating material. The thus captured particulate matter is burned by the heating element.

No air is newly supplied from the outside but only oxygen contained in exhaust gases is used to burn particulate matter (mainly carbon microparticles). Since no heat is lost, the filter is high in heating efficiency. It is also possible to regenerate the filter in a smaller quantity of thermal energy.

A heat insulating material may be separated from a filter. Alternatively, the heat insulating material is used as the filter at the same time, by which the apparatus can be made compact.

Further, a charging element is provided upstream on the filter material, thereby particulate matter contained in exhaust gases is subjected to electrical charge, thereby increasing the particulate matter capturing performance of the filter material. Thus, the rate of increase in the pressure loss is also suppressed: Still further, particulate matter is further increased in heating efficiency.

According to the present invention, provided is a particulate matter removal apparatus capable of regenerating filters in a smaller quantity of thermal energy (smaller amount of electricity consumed by an electric heater, where applicable) and excellent in removing particulate matter.

BRIEF DESCRIPTION OF THE DRAWINGS

Fig. 1 is a schematic diagram showing an experiment in which an electric heater is provided on the surface of a filter which filters exhaust gas to retain carbon microparticles and the heater, which is kept exposed outside, is used to heat the filter in quiescent air.

Fig. 2 is a schematic diagram showing an experiment in which an electric heater is provided on the surface of a filter which filters exhaust gas to retain carbon microparticles, the heater is further covered with a heat insulating material, and the heater insulated by the heat insulating material is used to heat the filter in quiescent air.

Fig. 3 shows a photograph of an appearance of 17 small pieces of a breathable filter after being heat-treated by allowing the heating time and heating temperatures to change.

Fig. 4 is a graph showing the heating temperature, heating time and burning state based on the result of Fig. 3.

Fig. 5 is a sectional view showing a state at the time of filtration in a first constitution of the present invention.

Fig. 6 is a sectional view showing a state at the time of regeneration of the filter in the first constitution of the present invention.

Fig. 7 is a sectional view showing a state at the time of filtration in a second constitution of the present invention.

Fig. 8 is a sectional view showing a state at the time of regeneration of the filter in the second constitution of the present invention.

Fig. 9 is a sectional view showing a state at the time of filtration in a third constitution of the present invention.

Fig. 10 is a sectional view showing a state at the time of regeneration of the filter in the third constitution of the present invention.

Fig. 11A is a longitudinal sectional side view of the cylindrical ceramic fiber filter in the present invention.

Fig. 11B is a longitudinal sectional front view of the cylindrical ceramic fiber filter in the present invention.

Fig. 12 is a sectional view showing a state at the time of filtration in a fourth constitution of the present invention.

Fig. 13 is a sectional view showing a state at the time of regeneration of the filter in the fourth constitution of the present invention.

Fig. 14 is a sectional view showing a state at the time of filtration in a fifth constitution of the present invention.

Fig. 15 is a sectional view showing a state at the time of regeneration of the filter in the fifth constitution of the present invention.

Fig. 16 is a sectional view showing a state of filtration by one (lower) filter and regeneration of the other (upper) filter in a sixth constitution of the present invention.

Fig. 17 is a sectional view showing a state of filtration by one (upper) filter and regeneration of the other (lower) filter in the sixth constitution of the present invention.

Fig. 18 is a sectional view showing a state of regeneration of a filter, at which the flowing port is closed by the annular on-off valve, and filtration by other filters in a seventh constitution of the present invention.

Fig. 19 is a sectional view showing a state of regeneration of one (upper) filter, at which the flowing port is closed by the rotating slide-type on-off valve, and filtration by other filters in an eighth constitution of the present invention.

Fig. 20 is a left side drawing illustrating motions of a rotating slide-type on-off valve in the eighth constitution of the present invention having the four filter units A, B, C and D in Fig. 19.

Fig. 21 is a left side drawing illustrating motions of a rotating slide-type on-off valve in the eighth constitution of the present invention having the four filter units A, B, C and D in Fig. 19.

Fig. 22 is a graph illustrating a relationship between the electricity of an electric heater per area of heater (kW/m$^2$)

at the time of regeneration of the filter and the temperature elevation (K) on the surface of the filter 10 minutes after heating by the heater, in a ceramic fiber filter of the present invention.

Fig. 23 is a graph of variations of pressure loss observed in an apparatus, in its entirety, of filtering particulate matter-containing exhaust gas of the present invention.

Fig. 24 is a photograph of the cross section of a filter for showing a state of accumulated particulate matter on the filter when exhaust gas is filtered by the apparatus free of a charging element.

Fig. 25 is a photograph of the cross section of a filter for showing a state of accumulated particulate matter on the filter when electrically charged microparticle-containing exhaust gas is filtered by the apparatus having a charging element.

Fig. 26 is a graph illustrating a relationship between the filtration elapsed time depending on the presence or absence of a charging element and the increase in filter pressure loss.

Fig. 27 is a graph illustrating measurement results of the mean particle size and particle density distribution of particulate matter in gas.

Fig. 28 is an electron microscope photograph of ceramic fibers which are used as a material of the filter of the present invention.

Fig. 29 is a sectional view showing a state of filtration by one (lower) filter and regeneration of the other (upper) filter in a ninth constitution of the present invention.

Fig. 30 is a drawing illustrating motions of an independent on-off valve in the ninth constitution of the present invention given in Fig. 29.

Fig. 31 is a drawing illustrating motions of an independent on-off valve in the ninth constitution of the present invention given in Fig. 29.

Fig. 32 is a graph illustrating the result obtained by measuring the time-related change in pressure loss in the apparatus having four filter units.

Fig. 33 is a graph of indicating areas expressed by the formulae (1) and (2) of the present invention and measured values of k/d and pcd for seven filters with the thickness of d=0.01 m.

Fig. 34 is a graph of indicating areas expressed by the formulae (1) and (2) of the present invention and measured values of k/d and pcd for seven filters with the thickness of d=0.05m.

Fig. 35 is a graph in which in Fig. 33 and Fig. 34, curves obtained at a temperature elevating time of 100 seconds (sec) are plotted together in Fig. 33 and Fig. 34.

## DETAILED DESCRIPTION

[Regarding the first invention]

For example, Patent Document 2 has disclosed a method in which particulate matter captured by a breathable filter material is heated by using an electric heater for burning and removal.

However, the above method requires a great amount of electricity for the electric heater. If this method is applied to clarify exhaust gases from a diesel engine, for example, there is a significant reduction in fuel efficiency of the engine.

A poor thermal efficiency is a reason why a great amount of electricity is required by the electric heater of Patent Document 2. The poor thermal efficiency is due to a fact that some of the thermal energy supplied from the electric heater is dissipated and lost, while the energy is used for heating particulate matter captured by a filter, thus resulting in a failure of preventing the dissipation or loss of energy.

The inventors have found experimentally that commercially available blankets made of ceramic fibers having a fiber diameter of several microns, a bulk density of $130kg/m^3$ and a thickness of about 15 mm are excellent in capturing particulate matter contained in exhaust gases from diesel trucks.

A blanket made of ceramic fibers exhibited a pressure loss of about 1000Pa (0.01 atm) when exhaust gases from a diesel truck are allowed to flow at a linear velocity of 1m/s or less. They found experimentally that the blanket was not superior to a filter composed of ceramic honeycomb structures (Patent Document 1) in terms of particulate matter capturing efficiency but higher in efficiency than the filter in which a woven fabric of silicon carbide ceramic fibers is formed in a pleated manner (Patent Document 2).

They also found that the blanket made of ceramic fibers was quite excellent in heat insulating properties and heat resistance. The present invention has been made, with these properties taken into account.

A filter high in heat insulatingproperties and heat resistance is used because of easy regeneration of filters.

An apparatus for capturing and removing particulate matter in the present invention has placed importance on the regeneration of filters rather than the filtration itself.

An object of the present invention is to regenerate filters in a smaller quantity of energy consumption in a simplified manner.

In the first invention of the present invention, a heat-insulating breathable filter material is used, a heat insulating material is arranged so as to be in close proximity to the breathable filter material, and a heating element is arranged between the breathable filter material and the heat insulating material. Thereby, thermal energy from the heating element is prevented from being dissipated outside while the energy is used for heating the particulate matter capturing face of the breathable filter material. In other words, no thermal energy is substantially dissipated or lost. Almost all the energy from the heater is used for heating and burning particulate matter. Therefore, particulate matter captured by the breathable filter material can be burned and removed in a smaller quantity of thermal energy.

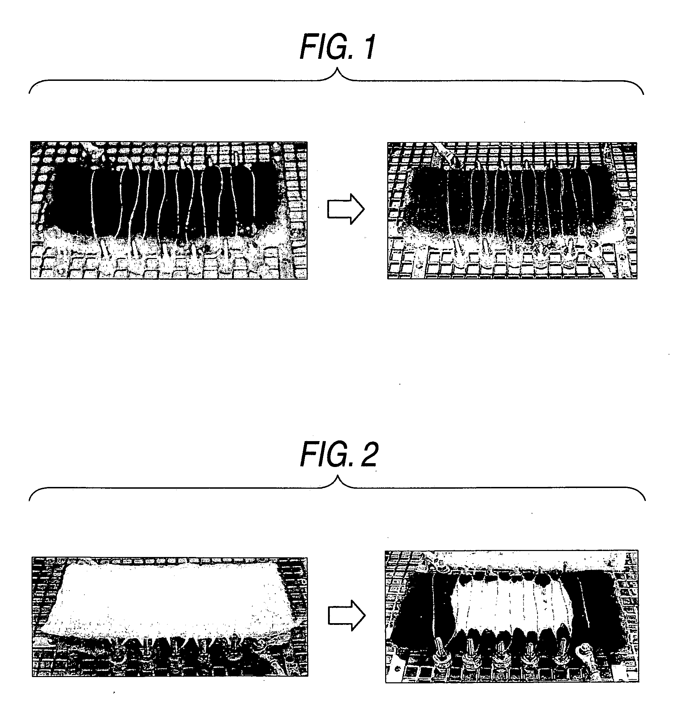

A detailed description will be made for the above action. One experimental example is shown in Fig. 1 and Fig. 2. A heating wire (nichrome wire) is provided on a filter composed of ceramic fibers which has captured particulate matter (carbon microparticles, etc.) by allowing exhaust gases from a diesel truck to flow. Electricity is supplied to the heating wire to burn particulate matter. Then, a state of burning and removing particulate matter is examined.

Fig. 1 shows an experiment in which a heating wire is provided on a filter composed of ceramic fibers after particulate matter is captured, a heat insulating material is not provided on the heating wire but the heating wire exposed outside is used to heat particulate matter. Heating is conducted in quiescent air, with this state kept. The photograph at the left shows an initial heating (in quiescent air) . A black portion on the filter shows particulate matter (carbon microparticles). The photograph at the right shows a state observed two minutes after heating (in quiescent air). The surface of the filter is still black. A large amount of particulate matter (carbon microparticles) remains on the filter. The exposed heater fails in elevating a temperature due to thermal loss and is unable to sufficiently heat and burn particulate matter.

Fig. 2 shows an experiment in which a heating wire is provided on a filter composed of ceramic fibers after particulate matter is captured, the heating wire is further covered with a heat insulating material of ceramic fibers, an equal level of electricity is applied to the heating wire, with the state kept, and the filter is heated. The photograph at the left shows a state of initial heating (in quiescent air). A substance which appears white is the heat insulating material. The photograph at the right shows a state that the heat insulating material is removed two minutes after the heating (in quiescent air) to reveal the inside of the apparatus. A central portion at which the heating wire is located appears white. This shows that carbon microparticles (particulate matter) are substantially burned and eliminated at the central portion. Particulate matter is substantially burned and removed.

All experiments have been conducted in quiescent air inside a room. The heater is used at the same electricity level and at the same amount of time. Nevertheless, in Fig. 1 where the heating wire is exposed, almost all the carbon remained as is. In contrast, in Fig. 2 where the heating wire is covered with a heat insulating material to prevent a drop in temperature, carbon microparticles are substantially burned and eliminated.

As apparent from these experimental results, it has been found that ceramic fibers are arranged so as to be in close proximity to a filter composed of ceramic fibers and a heater, and the heater is covered from both sides by ceramic fibers, thereby making it possible to prevent heat loss, significantly increasing the thermal efficiency of the heater and sufficiently burning and removing particulate matter captured by the filter in a smaller quantity of thermal energy.

In this instance, an importance is that even in quiescent air, unless the heat insulating material is placed on the heater, as illustrated in Fig. 1, the thermal efficiency is extremely poor and particulate matter captured by the filter is not burned or removed. This is because the convection phenomenon often results in heat dissipation although the air itself is low in heat conductivity.

In related arts, in order to increase the heating efficiency, gases which enter into a filter are blocked and heated. Air in the vicinity of the heated areas will conduct heat to a metal great in thermal capacity and high in heat conductivity or bulky ceramics great in thermal capacity but low in heat conductivity due to the convection phenomenon. Thus, thermal energy is greatly dissipated and lost.

[Regarding the first invention (filter/heater/ heat insulating material)]

In the present invention, a heat insulating material is arranged in such a way as to be in close proximity to the particle capturing face of a breathable filter material composed of heat-insulating ceramic fibers, and a heating element is arranged between the breathable filter material and the heat insulating material. Therefore, if gas flow is inhibited, dissipation is inhibited, and the particulate matter capturing face of the breathable filter material can be efficiently heated in a smaller quantity of thermal energy.

It is noted that a heat insulating material small in thermal capacity is preferable. For this purpose, ceramic fibers or sponge-form ceramics greater in porosity are preferable.

Further, the heat insulating material may be treated so as to be attached closely to the breathable filter material temporarily at the time of heating. However, it is not always necessary that the heat insulator is closely attached thereto. In other words, such a structure is acceptable that air at a clearance between the heat insulating material and the breathable filter material is less likely to flow out from the clearance due to the convection phenomenon. It has been experimentally confirmed that where a clearance between the heat insulating material and the breathable filter material is about several centimeters, heating characteristics can be obtained which are comparable to those obtained when closely attached.

[Regarding the second invention (filter/heater/filter]

The second invention of the present invention is that the heat insulating material of the first invention is replaced by a breathable filter material by taking advantage of the heat insulating properties of ceramic fibers which are used as a breathable filter material. The apparatus of the second invention is made more compact and able to utilize heat at a greater efficiency than that of the first invention.

[Regarding the third invention (electrical charge + filtration)]

The third invention of the present invention is that in the first or the second invention, a charging element which electrically charges particulate matter is additionally provided upstream on a breathable filter material. The charging element is used to electrically charge particulate matter in exhaust gases, by which particulate matter can be easily attached to ceramic fibers constituting the breathable filter material due to the static electricity.

An experiment is conducted in which the charging element is given as a negative electrode direct current corona discharge tube, the filter material is given as a commercially-available blanket constituted with ceramic fibers having a fiber diameter of several microns, a bulk density of 130kg/m$^3$ and a thickness of about 15 mm, and exhaust gases are allowed to pass, thereby capturing particulate matter. Exhaust gases from a diesel truck are allowed to flow to the filter at a linear velocity of 1m/s or less.

It has been found that the particulate matter capturing efficiency is equal to or better than that obtained by a filter composed of ceramic honeycomb structures (Patent Document 1, etc.). This finding means that the capturing effect is significantly increased when particles are subjected to electrical charge. The electrical charge offers two advantageous effects, in addition to this effect.

Gas flowing channels in a breathable filter material composed of ceramic fibers are made narrow with an increased quantity of captured particulate matter due to the fact that the gas flowing channels are filled with particulate matter, thus resulting in an increased pressure loss. However, it was found that in the present invention, a charging element is used to electrically charge particulate matter, by which the rate of increase in pressure loss of the breathable filter material composed of ceramic fibers is suppressed. This is one of the new effects.

When particulate matter is subjected to electrical charge, particulate matter is trapped by a breathable filter material and measurably repel each other due to static electricity, and accumulate on the breathable filter material. Therefore, it is considered that these particles are localized on the surface, which then results in alleviation of arrested channels of gases.

Observation is made for the cross section of the breathable filter material composed of ceramic fibers after particulate matter is captured.

Where particulate matter is not subj ected to electrical charge by a charging element, a type of deep filtration develops, in other words, particulate matter penetrates deep into the filter (downstream)and captured by the filter. Morespecifically, captured particles are substantially similar in density in a thickness direction of the filter.

Where particulate matter is subjected to electrical charge by using a charging element, a type of surface filtration develops, in other words, particulate matter is substantially captured on the surface of a filter (upstream). The particulate matter does not penetrate deep into the filter (down stream) but is substantially captured on the surface. Therefore, the increase rate in pressure loss is slowed.

It is also found that captured particles are distributed unevenly in a thickness direction of the filter, which is extremely favorable in heating by the heater. Particles are distributed so as to be high in density on the surface of the filter (upstream) and low in density on the back face thereof (downstream) . The heater is located near the surface. Particles are brought closer to the heater, and microparticles are heated more intensively by the heater. Heat rays (infrared rays) from the heater do not reach microparticles located deep inside the mesh of the filter which is porous and complicated in structure due to radiation. Since the filter is high in heat insulating properties, heat rays have difficulty reaching at the microparticles located deep inside by the heat conduction.

Since air convection is suppressed by a complicated mesh structure of the filter, heat will not reach the deeper area by the convection. In other words, microparticles trapped at a deep area at the mesh of the filter are heated with difficulty by the heater because the filter is adversely influenced by the heat insulating properties and porosity. However, where exhaust gases are subjected to electrical charge, surface filtration takes place, by which microparticles are localized on the surface, and heat is easily conducted by radiation, conduction and convection, thereby captured microparticles are significantly effectively heated by the heater.

In other words, when particulate matter is subjected to electrical charge by a charging element, particulate matter is captured and localized on the surface of the filter where a temperature is elevated highest (the upstream surface) by heating elements. Therefore, particulate matter is more efficiently burned by the heating element, and carbon particles or the like can be burned and removed in a smaller quantity of thermal energy, thus making it possible to regenerate a breathable filter material.

These actions and effects are obtained by subjecting particulate matter in exhaust gases to electrical charge, and corona discharge may be easily applied to a charging element. In addition to the corona discharge, other electrical discharge systems for supplying electrically charged particles to a space by utilizing electrical discharge phenomenon may be used, for example, silent discharge. Other electrical charge means such as radiation ray and electron beams may be used.

[Regarding the fourth invention (range of k/d and pck)]

The fourth invention of the present invention is that in the first to the third inventions, a ratio of heat conductivity of heat-insulating breathable filter material, k (unit, W/mK) to thickness, d (unit, m) (that is, that obtained by dividing the heat conductivity by the thickness; k/d) is 50 W/m$^2$K or less, and more preferably, 20W/m$^2$K or less, and a product of bulk density of breathable filter material, ρ (unit, kg/m$^3$), specific heat (unit, J/kgK) and thickness, d (unit, m), that is, pcd, satisfies the formula (1) and more preferably satisfies the formula (2).

In considering the ability of a heating element necessary for heating the particulate matter capturing face of a breathable filter material up to a temperature necessary for burning and removing particulate matter, important are requirements on the ratio of the heat conductivity, k, to the thickness of the breathable filter material, d, as well as the bulk density of the breathable filter material, p, and the specific heat, c. Hereinafter, a detailed description will be made for the requirements.

First, a description will be made for a heating temperature necessary for burning and removing particulate matter.

For example, where consideration is given to the removal of particulate matter in exhaust gases from a diesel engine, particulate matter is mainly based on carbon. When the particulate matter is oxidized, burned and removed, it is necessary to heat particulate matter at 550°C or more.

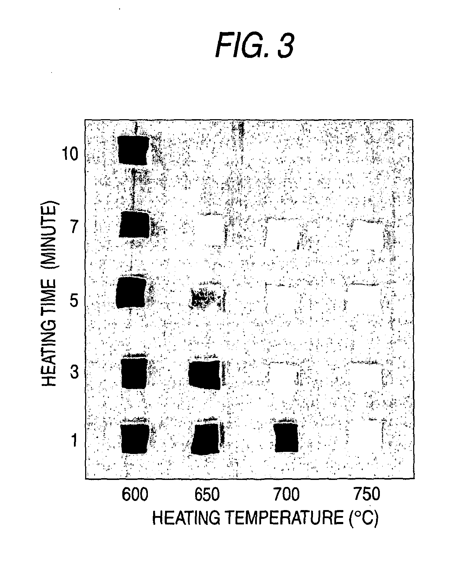

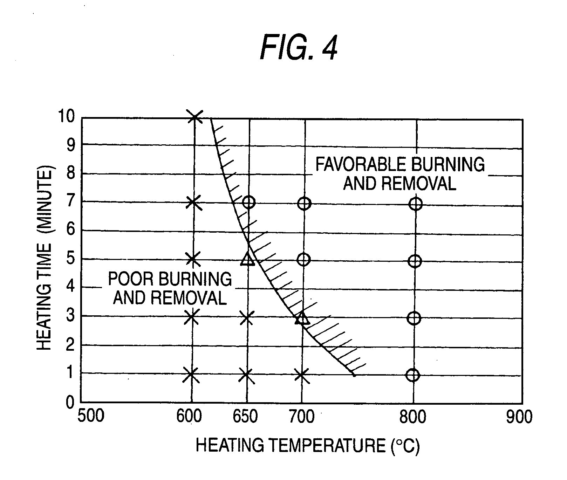

Small pieces of a breathable filter material which has captured particulate matter is heated in the air by using an electric oven to examine a relationship between heating temperatures and treatment time. The results are shown in Fig. 3 and Fig. 4.

The photograph of Fig. 3 shows an appearance of 17 small pieces of a breathable filter after being heat-treated by allowing the heating time and heating temperatures to change. Four heating temperatures are used, that is, 800°C, 700°C, 650°C and 600°C. Five of heating time periods are used, that is, ten minutes, seven minutes, five minutes, three minutes and one minute. These small pieces are arranged in every direction and photographed in accordance with the temperature and the time. A breathable ceramic fiber filter is originally white in color, but a filter which has filtered particulate matter is turned black due to black particulate matter. A substance which appears black indicates that particulate matter is attached in a great quantity.

Before being heat-treated, a filter appears black because the surface of the filter is covered with particulate matter primarily based on carbon. After the filter is heat-treated, carbon is burned, and a white base layer of the filter becomes visible. In other words, when the filter appears white, it is regenerated to give better results. Where the filter remains black, this indicates that carbon particles remain in a great quantity and the filter is not regenerated.

The small pieces are still black after 10 minutes at a heating temperature of 600°C. Carbon remains across the entire filter. Therefore, (carbon) particulate matter is less effective in oxidization, burning and removal when heated at 600°C for 10 minutes.

Fig. 4 is a graph showing burning/removal state after heating a filter, which filters exhaust gas to retain carbon microparticles, at temperatures of 600°C, 650°C, 700°C and 800°C for one, three, five, seven and ten minutes with reference to color of the filter. In Fig. 4, the horizontal axis is taken as the heating temperature (°C) and the vertical axis is taken as the heating time (minute). The heating and treatment in Fig. 3 are reflected on a coordinate point of the heating time and the temperature. The symbol o represents a favorable regeneration, Δ represents a moderate regeneration and × represents a poor regeneration.

A curve descending right given in Fig. 4 is a critical line. Thereby, a filter is regenerated in such a way that the heating time and the heating temperature are given right above, and the filter is not regenerated by treatment in which the heating time and the heating temperature are given left below.

A filter is black when heated at 650°C for three minutes and turned white when heated for seven minutes. It is found from the result that satisfactory effects of oxidation, burning and removal can be obtained when the filter is heated at 650°C for about seven minutes.

When heated at 700°C, the filter is black for one minute and turned white for three minutes, five minutes and seven minutes. It is found from the result that when the filter is heated at 700°C, satisfactory effects of oxidation, burning and removal canbe obtained for about three minutes.

When the filter is heated at 800°C, pieces of the filter are turned white for one minute, three minutes, five minutes and seven minutes. When the filter is heated at 800°C, satisfactory effects can be obtained even for one minute. From a practical point of view, it is preferable to heat the filter at 700°C or more for several minutes (three to seven minutes).

An appropriate selection of ceramic fibers has found that ceramic fibers are commercially available which have sufficient durability at about 900°C. If a filter is heated at 900°C, the filter can be regenerated for one minutes or less.

Exhaust gases from a diesel truck are at about 70°C at the time of idle running and at about 200°C or less on average at the time of running in an urban area. In order to burn and remove particulate matter under these conditions (filter regeneration), it is necessary to obtain a heating ability to maintain the temperature elevation of 500K (the same in terms of °C) to 600K or so for several minutes.

Where an electric heater is used as a heating element to be installed on a vehicle such as a diesel truck, it is preferable that the heater consumes electricity at about 1 kW or less for regenerating a filter. It is also preferable that the heating time is about 10 minutes or less. If the heater is used at a greater amount of electricity for a longer heating time, a lower fuel efficiency is found, which is not desirable.

In order to burn and remove particulate matter under the above-described restrictions, it is important to select the material and the shape of a filter.

The simplest modeling will be considered in which a breathable filter material is fabricated in a sheet form.

The heat conductivity of filter material is given as k (unit, W/mK), the thickness of filter is given as d (unit, m), and the area of filter is given as S (unit, $m^2$). A temperature difference $\Delta T$ (unit, K) is assumed to be found between the particulate matter capturing face A of the filter material (upstream face) and the other face B (downstream face). Since the temperature difference $\Delta T$ is found and the thickness is given as d, a temperature gradient is $\Delta T/d$. A heat flow is $k\Delta T/d$ which is obtained by multiplying the temperature gradient by the heat conductivity, k. If the area of the filter is given as S, a heat flow, $kS\Delta T/d$, which is an amount S times thereof, is flown from a higher temperature side, A, to a lower temperature side, B. In order to attain the above heat flow, a heating element may generate an equal amount of heat.

Therefore, in order to heat a filter having the thickness, d, the heat conductivity, k, the area, S and the temperature difference between the surface and the back face, $\Delta T$, a heating element which generates a heating value Q (unit, W) expressing the following formula is required.

$$Q(W) = Sk\Delta T/d \qquad (3)$$

This formula is modified to determine a heating value Q/S which is required per unit area of a heating element.

$$Q/S = k\Delta T/d \qquad (4)$$

A heating element having a heating density, Q/S (unit, W/$m^2$) equal to a value obtained by multiplying a temperature difference, $\Delta T$ by k/d is required.

An electric heater is assumed to be used as a heating element. It is generally known that a higher heating density will result in a shorter life of the heater.

In view of the durability of a heater, a practical heating density is set to be 25 kW/$m^2$ or lower, and more preferably 10 kW/$m^2$ or less. More specifically, the following formula should be satisfied.

$$Q/S = k\Delta T/d \leq 25000W/m^2 \qquad (5)$$

And, more preferably, the following formula should be satisfied.

$$Q/S = k\Delta T/d \leq 10000W/m^2 \qquad (6)$$

Thereby, given is an upper limit to the heating density of a heater.

As described previously, in order to burn and remove particulate matter emitted from a diesel engine, there is a case where a temperature is elevated at about 500K (the same in terms of °C) for practical purposes. In order to deal with this case, $\Delta T$ is set to be 500K. Thus, k/d determined under the above condition is able to satisfy the formulae (5) and (6) at a lower temperature difference AT. As a result, it is acceptable to consider $\Delta T = 500K$.
$$k/d \leq 50W/m^2K \qquad (7)$$

The above formula is obtained. More preferably,
**[0103]**

$$k/d \leq 20W/m^2K \qquad (8)$$

There should be selected a material and shape of a filter material which satisfies the above formula.
In other words, such a filter material is adopted that has a ratio, k/d, of the heat conductivity, k, to the thickness, d, expressed by the formula (7) and more preferably by the formula (8), thereby making it possible to alleviate requirements of the durability of a heating element. Thereby, it is possible to practically heat and regenerate a filter.
On the other hand, a limited temperature elevating time for elevating the particulate matter capturing face of a breathable filter material to a desired temperature is required.
The temperature elevating time is determined by the specific heat of breathable filter material, c (unit, J/kgK), the bulk density of filter material, $\rho$ (unit, $kg/m^3$) and the thickness of filter, d (unit, m).
As described previously, a simple modeling is made in which a breathable filter material is fabricated in a sheet form, and a time-related change in temperature difference between the heated face and the non-heated face of a filter, $\Delta T$ (t) can be evaluated approximately by the following formula.
$$\Delta T(t) = \Delta To \times \{1-\exp(-t/\tau)\} \qquad (9)$$

In this instance,
**[0111]**

$$\Delta To = (Q/S) \times (d/k) \qquad (10)$$

$$\tau = (D \times \rho a \times ca + d \times \rho \times c/2) \times (d/k) \qquad (11)$$

D: thickness of air layer between a heat insulating material and a filter
pa: density of air, ca: specific heat of air

Where D is assumed to be substantially similar to d in quantity, in general, $D \times pa \times ca$ is sufficiently small as compared with $d \times p \times c/2$. In approximation which neglects terms of air,
**[0115]**

$$\tau \sim d^2 \times \rho \times c/2k = d^2 \rho c/2k \qquad (12)$$

The above formula is obtained.

As apparent from the formulae (9) and (12), τ denotes a time constant of a temperature elevating time. After the passage of time three times τ, ΔT (t) will reach 95% or more of ΔTo, which is considered to substantially reach a thermal balance in view of engineering. Therefore, with consideration given to conformity with the conditions of the previously described formulae (7) and (8), the formula (9) is modified as given in the following formula (13), which is also similar in implications to engineering.

$$\Delta T(t) = \Delta To \times \{1 - exp(-t/\tau)\}/0.95 \qquad (13)$$

As described previously, in order to burn and remove particulate matter emitted from a diesel engine, there is a case where temperature elevation of about 500 (K) is practically required. This case should be handled correspondingly.

It is also preferable that the heating time is practically less than 10 minutes. Where a high temperature for burning particulate matter is to be maintained for five minutes, it is preferable that the temperature elevating time is kept for less than five minutes (=300 seconds). In other words, it is preferable that in the formula (13), ΔT(t) is in excess of 500 (K) at t=300 (seconds). This description will be described as follows.

$$500 \ (K) \geq \Delta To \times \{1 - exp(-300(sec)/\tau)\} \ /0.95 \qquad (14)$$

The formula (14) is modified by using the formulae (10) and (12) to obtain the following formula.

$$\rho cd \leq -2 \times (k/d) \times 300/ln\{1 - 0.95 \times (k/d) \cdot (500/(Q/S)) \qquad (15)$$

A minus symbol is indicated on the right side of the formula (15), which is a result of the natural logarithm of the denominator on the right side being given a minus value. Therefore, the right side is positive. A physical meaning of this formula is that in order to decrease the temperature elevating time to a practical value, it is important that a product, ρcd, obtained by multiplying the bulk density, ρ, by the specific heat, c, and by the thickness, d, which corresponds to the thermal capacity per unit area of a filter material, is less than a value defined by the formula (15).

As a matter of course, it is desirable that the thermal capacity of a filter, ρcds, is small in order to shorten the temperature elevating time of the filter.

Incidentally, as described previously, in practice, the heating density (watt density) $Q/S$ ($W/m^2$) is preferably 25 ($KW/m^2$) or less and more preferably 10 ($KW/m^2$) or less. Therefore, the formula (15) can be modified as follows.

$$\rho cd \leq -600 \times (k/d)/ln(1 - 0.019 \times (k/d))\} \qquad (16)$$

The above formula is obtained. The right side is positive. Since k/d is smaller than $50W/m^2K$, an antilog of the natural logarithm, In, is positive. More desirable conditions will be given by the following formula.

$$\rho cd \leq -600 \times (k/d)/ln(1 - 0.0475 \times (k/d))\} \qquad (17)$$

This is because when k/d is smaller than 20 $W/m^2K$, an antilog of the natural logarithm, In, is positive. The thus obtained formula (16) is the previously described formula (1), and the formula (17) is the previously described formula (2).

In conclusion, a filter material is to satisfy at the same time the formulae (7) and (1). Further, it is more preferable that a filter material satisfying the formulae (8) and (2) at the same time is used, thereby making it possible to provide the apparatus capable of heating and regenerating the filter efficiently in a smaller quantity of thermal energy.

[Regarding the fifth invention (biodegradable fibers)]

The fifth invention of the present invention is that in the particulate matter removal apparatus of the first to the fourth invention, ceramic fibers of a breathable filter material are constituted with biodegradable fibers mainly based on silicon dioxide ($SiO_2$: silica), magnesium oxide (MgO: magnesia) and calcium oxide (CaO: calcia).
Ceramic fibers are constituted with biodegradable fibers which are based on non-alumina and mainly based on silicon dioxide (silica), magnesium oxide (magnesia) and calcium oxide (calcia), thereby making it possible to provide an apparatus which impacts the human body to a lesser extent when dust of ceramic fibers of the filter material is discharged outside the apparatus for some reason such as breakage of the apparatus.

[Regarding the sixth invention (a plurality of filter units; sequential switch of filtration/regeneration)]

The sixth invention of the present invention is that in the particulate matter removal apparatus of the first to the fifth invention, an on-off valve and a breathable filter material are available in two or more combinations, each of the on-off valves is controlled for opening and closing actions so that at least one of the on-off valves is opened while gases are supplied.
Thereby, eliminated is the necessity for halting the supply of gases or bypassing gases without treatment when a breathable filter material is heated and regenerated, making it possible to continuously capture particulate matter and regenerate the breathable filter material.

[Embodiment 1]

[Embodiment 1 (embodiment of the first invention)]

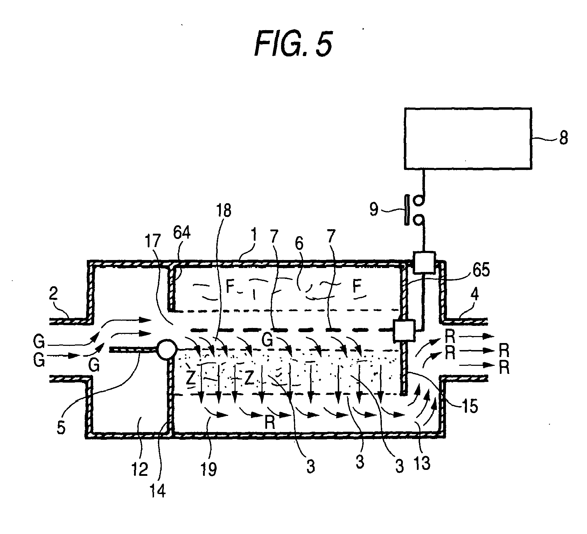

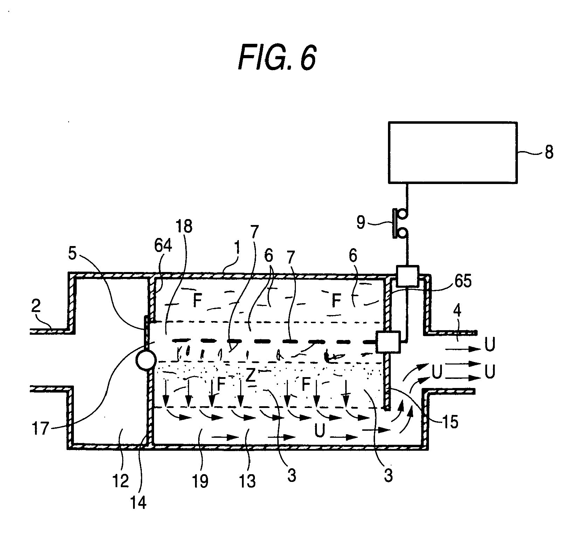

[Embodiment 1-1 (Fig. 5, Fig. 6)]

Fig. 5 and Fig. 6 show Embodiment 1 of the first invention. Fig. 5 shows a state in which exhaust gases are filtered and clarified, and Fig. 6 shows a state in which a filter is regenerated. More specifically, Fig. 5 illustrates a first constitution of the present invention, that is, the exhaust gas filtration apparatus in which a ceramic fiber filter is provided parallel with a channel of exhaust gas, a heat insulating material of ceramic fibers is fixed so as to face the filter, an electric heater is provided between the filter and the heat insulating material, an on-off valve is provided at a gas inlet. This is a sectional view showing a state that the on-off valve of the apparatus is opened, thereby allowing exhaust gas to flow (filtration). Fig. 6 illustrates a first constitution of the present invention, that is, the exhaust gas filtration apparatus in which a ceramic fiber filter is provided parallel with a channel of exhaust gas, a heat insulating material of ceramic fibers is fixed so as to face the filter, an electric heater is provided between the filter and the heat insulating material, an on-off valve is provided at a gas inlet. This is a sectional view showing a state that the on-off valve is closed, exhaust gas is blocked, and the heater is used to heat the filter for regeneration.
A housing 1 is provided with a gas inlet 2, a filter 3 and a gas outlet 4. Exhaust gas G which contains particulate matter Z flows from the gas inlet 2 along the center line of the housing 1. An interior space of the housing 1 is composed of an anterior chamber 12 and a posterior chamber 13 and divided by partitions 14, 64. The anterior chamber 12 is a space only for allowing gases to flow into. The posterior chamber 13 is provided with the filter 3, the heat insulating material 6, the heater 7, etc., where filtration and regeneration are carried out.
There is provided a filter entry port 17 between the partitions 14, 64. The on-off valve 5 is provided immediately in front of the filter entry port 17, and gases are flowed or blocked by opening or closing the filter entry port 17. In the filter 3, the flow of gases is changed to an axially orthogonal direction. The filter 3 is constituted with ceramic fibers F having the thickness, d, the width, w and the length, 1 in a longitudinal direction (axial line) . The front end of ceramic fibers is supported by the partition 14, whereas the back end is supported by the partition 15. The aerated face of the filter is retained by a breathable and appropriately strong support material, for example, wire mesh or punching metal, from downstream. It is noted that a breathable material which is small in thermal capacity and negligible in heat conduction loss outside the filter, for example, wire mesh coarse in mesh and small in wire diameter, may be placed on the upstream face of the filter, thereby preventing the fraying of fibers after a prolonged use.
A heat insulating material 6 composed of ceramic fibers F is provided so as to extend in a longitudinal direction opposite to the filter 3. The front end of the heat insulating material 6 is supported by the partitions 64, whereas the back end is supported by the partitions 65. The aerated face of the filter is retained by a breathable and appropriately strong support material, for example, wire mesh or punching metal from downstream. It is noted that a breathable material which is small in thermal capacity and negligible in heat conduction loss outside the filter, for example, wire mesh coarse in mesh and small in wire diameter, may be placed on the upstream face of the filter, thereby preventing the fraying of fibers after a prolonged use.

The filter 3 is also constituted with ceramic fibers similar in material to the heat insulating material 6. The heat insulating material 6 is gas-impermeable and free of filtration actions, with only insulation actions. The filter 3 is gas-permeable and provided with filtration actions. The filter 3 is also heat insulative.

An electric heater 7 is provided between the filter 3 and the heat insulating material 6 so as to extend axially in close proximity to both. The electric heater 7 receives electricity through a cord from an external power source 8 of the heater. Halfway, provided is a switch 9. A narrow upstream channel 18 held between the filter 3 and the heat insulating material 6 is provided in an axial direction. The entry port 17 of the upstream channel 18 is opened and closed by the on-off valve 5. A space outside the filter 3 is given as a downstream channel 19 which is parallel to an axial line.

Where the on-off valve 5 is opened, exhaust gas G introduced from the gas inlet 2 is spread at the anterior chamber 12, thereby entering from the filter entry port 17 into the upstream channel 18. Since the heat insulating material 6 is blocked, there is no gas entering thereinto. The exhaust gas G enters into porous fibers of the filter 3, passing through the filter 3 in an axially orthogonal direction. Particulate matter Z remains among ceramic fibers of the filter 3 after filtration. Clarified gas R from which the particulate matter Z is removed enters into the downstream channel 19, changing the flow in a direction parallel to an axial line and then going out from the gas outlet 4.

In the above example, heat from the heater is contained, by which a sheet-like heat insulating material 6 is arranged in close proximity so as to face a breathable sheet-like ceramic fiber filter 3 for capturing particulate matter Z. Since an electric heater is provided at a narrow clearance between the heat insulating material 6 and the ceramic fiber filter 3, an efficient heating can be carried out. A clearance between the heat insulating material 6 and the filter 3 is about 1 cm to 5 cm (0.01 m to 0.05 m). Gases are designed to flow through the upstream channel 18 of the clearance into the filter 3.

An on-off valve 5 is opened at the time of filtration of exhaust gas G. When the on-off valve 5 is opened, the exhaust gas G flows into the filter 3, particulate matter Z contained in the exhaust gas G is captured by the filter 3 to clarify gas (Fig. 5). In this instance, no electricity is supplied to the electric heater.

The filter 3 is clogged soon due to particulate matter Z, resulting in an increase in pressure loss. Then, it is necessary to remove the particulate matter Z from the filter regularly or whenever necessary. The particulate matter Z is combustible and mainly based on carbon microparticles. Particulate matter can be removed by burning. When the particulate matter Z captured on the filter 3 is heated, burned and removed, the on-off valve 5 is closed and the filter entry port 17 is closed.

Gas flow is blocked, and a switch 9 is closed to supply electricity to an electric heater 7 (Fig. 6). The heater elevates temperatures of the upstream channel 18 and the filter 3 by about 500 K. Heat from the electric heater 7 is not dissipated due to the presence of the filter 3 and the heat insulating material 6 and can be used for effectively heating particulate matter Z. Thereby, the particulate matter Z captured by the filter 3 can be heated, burned and removed. Burned gas U is exhausted from the gas outlet 4. This is called filter regeneration.

After the filter is completely regenerated, the switch 9 is cut off to halt the electricity to the electric heater 7. The on-off valve 5 is returned and opened. The exhaust gas G is again allowed to flow into the filter 3, by which particulate matter Z from the exhaust gas G is to be captured. Therefore, the filter 3 repeats procedures of capturing particulate matter and heating and regenerating the filter 3.

Timing when a filter is heated and regenerated may be decided, depending on use purposes, for example, a timer is used to automatically carry out the heating and regeneration at a predetermined timing. Alternatively, the pressure loss of the filter or the pressure upstream on the filter is detected, and when the thus detected value is in excess of a predetermined value, the filter may be subjected to regeneration.

Further, any appropriate heating time may be selected depending on gas temperatures, accumulation of particulate matter and burning temperatures. It is also acceptable that the temperature of a filter or gas is detected to control the heating time.

An electric heater can be controlled by generally known methods such as current control and on-off control.

A filter material can be effectively fabricated by using high-temperature fire-resistant and heat-insulating fibers composed of ceramic fibers. Usable are those such as the SC blanket 1260 (product name) available from Shinnikka Thermal Ceramics Corporation, (mainly based on alumina and silicon dioxide (silica), maximum working temperature, 1260°C; average fiber diameter, $3\mu m$; specific heat, 1.05 kJ/kgK; bulk density, 130 kg/cm$^3$; heat conductivity at average temperature 600°C; 0.12 W/mK).

The filter material includes the SC blanket, SC 1400 and SC 1600M which are other ceramic fiber-based blankets available from Shinnikka Thermal Ceramics Corporation or the Isowool 1206 Blanket, Isowool 1500 Ace Blanket and Isowool Wet Felt, which are ceramic fiber-based blankets available from Isolite Insulating Products Co., Ltd.

These are 1000°C or more in heat resistance, about 3 $\mu m$ to 5 $\mu m$ in average fiber diameter, 0.05 W/mK to 0.6 W/mK in heat conductivity and about 70 kg/m$^3$ to 160 kg/m$^3$ in bulk density.

As with the filter material, a heat insulating material can be effectively fabricated by using high-temperature fire-resistant and heat-insulating fibers. The same material as the filter material may be used as a heat insulating material. If importance is not placed on breathability but placed on heat insulating properties, it is possible to use a type of high-temperature fire-resistant and heat-insulating fiber which is different from that used in the filter material.

Since a heat insulating blanket composed of ceramic fibers is easily deformed due to the pressure resulting from gas flow, it is desirable to retain the blanket by using a wire mesh. It is noted that where a material relatively large in thermal conductivity and thermal capacity such as a wire mesh is used on a gas outlet, there is no particular influence due to the intrinsic heat insulating properties of the filter.

Further, as a method for preventing the deformation due to the pressure from gas flow, a filter material is used after once being treated at a high temperature of 600°C or more, thus resulting in a decrease in deformation.

In view of the performance of capturing particulate matter, it is desirable to set a filter area in such a way that the linear velocity of gas at a filter portion is 3m/s or less and preferably 1m/s or less, depending on gas flow.

For example, where microparticles contained in exhaust gas from a diesel engine are removed, the displacement volume of the diesel engine is given as 5L (liter: $0.005m^3$), a representative engine speed is given as 2000 rpm, and an exhaust temperature in this instance is given as 200°C. Under these conditions, the exhaust air flow is given as about $8m^3$/min (=$0.134m^3$/s). The filter area may be given at about $0.134m^2$ in order for the linear velocity of gas flow at the filter portion to attain about 1m/s.

If the displacement volume of a diesel engine is 5L, a representative engine speed is 3000 rpm and an exhaust temperature in this instance is 450°C, the exhaust air flow is about $18.5m^3$/min (=$0.308m^3$/s). The filter area may be given at about $0.308m^2$ in order for the linear velocity of gas flow at the filter portion to attain about 1m/s.

Where there is a time-related variation in exhaust air flow of a diesel automobile, one available method is to adjust the filter area to a condition where the exhaust air flow reaches a maximum. Alternatively, the filter area may be designed by appropriately selecting a representative exhaust air flow, depending on the clarification performance necessary for the content of microparticles in each exhaust air flow.

The thickness of a filter, d, is preferably 5 mm or more (0.005 m). In particular, the thickness is preferably from about 12.5 mm to 25 mm (0.0125 m to 0.025 m).

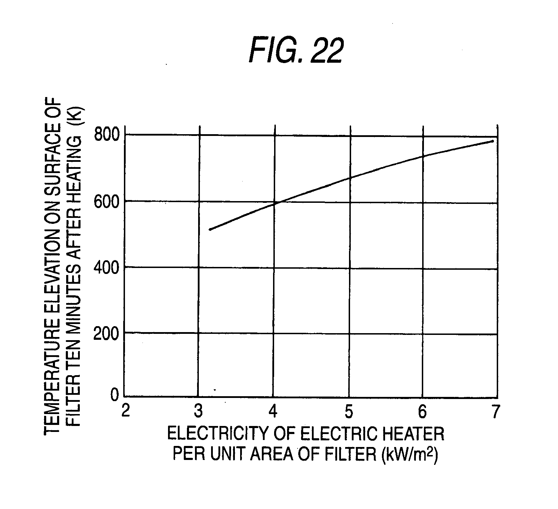

Fig. 22 shows a relationship between the electricity per unit area of filter consumed by an electric heater and the elevation of surface temperature of filter after 10 minutes of heating. The horizontal axis indicates the electricity per unit area of filter consumed by an electric heater ($kW/m^2$), and the vertical axis indicates the temperature elevation on the surface of filter after 10 minutes of heating (K). The temperature elevates to 500K after electricity consumption of 3kW per $1m^2$ of filter area. The temperature elevates to 700K after electricity consumption of 6kW per $1m^2$ of filter area. This is because the electric heater is held between the filter and the heat insulating material.

If the surface of the filter is exposed to an open space, the temperature does not elevate up to as low as 200K after electricity consumption of 6kw due to a thermal loss caused by natural convection and heat conduction resulting from the air.

In order to prevent the dissipation of heat from a space between a filter material and a heat insulating material, a heat insulating material composed of high-temperature fire-resistant and heat-insulating fibers may be provided at a part other than the filter material and the heat insulating material, for example, inside an on-off valve.

Nichrome wire or the like is appropriately usable in an electric heater. Nichrome wire is excellent in durability at temperatures exceeding 500°C and less vulnerable to corrosion in exhaust gases from a diesel engine. Nichrome wire is available in various types, for example, a linear type, a coil type and a mesh type. The shape and wire diameter may be appropriately selected so that a desired electrical resistance value can be obtained, with consideration given to output characteristics of the electric source of a heater used and so that there is no local abnormal heating. Further, iron chromium, Fe-Cr-Al, tungsten, tantalum and the like may be used in preparing an electric heater.

In the above example, the electric heater is used as a heating element. However, other methods such as use of a burner and infusion of high-temperature air may also be used.

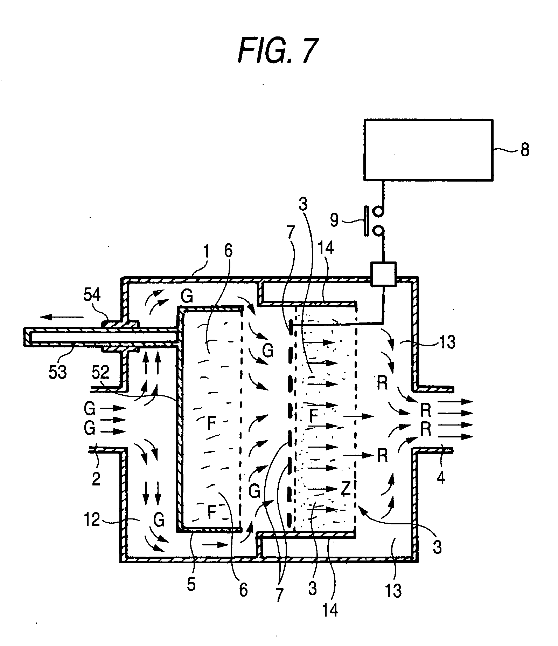

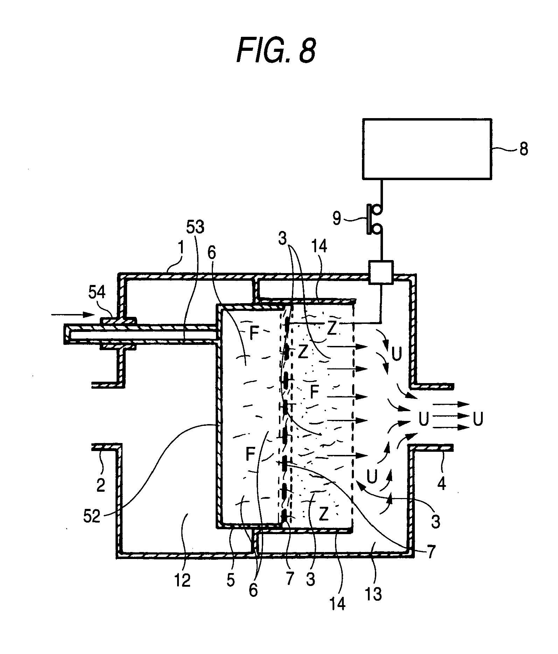

[Embodiment 1-2 (Fig. 7, Fig. 8)]

Fig. 7 shows another embodiment of the first invention of the present invention. This embodiment is similar in fundamental structure to that illustrated in Fig. 5, but designed to use a single member in place of a heat insulating material and an on-off valve arranged in close proximity to a filter. The heat insulating material is required for arrangement in close proximity to the filter only when the filter is heated and regenerated. Therefore, such necessity may be taken into account in constituting the apparatus.

Fig. 7 shows a state at the time of filtration, and Fig. 8 shows a state at the time of regeneration. More specifically, Fig. 7 illustrates a second constitution of the present invention, that is, the exhaust gas filtration apparatus in which a ceramic fiber filter is provided on a channel of exhaust gas, an electric heater is provided at a entry port of the ceramic fiber filter, and a heat insulating material is provided so as to face the filter and move reciprocally in a direction orthogonal to the face thereof. This is a sectional view showing a state that the heat insulating material is spaced from the electric heater, and the on-off valve is opened, thereby exhaust gas is allowed to flow (filtration). Fig. 8 illustrates a second constitution of the present invention, that is, the exhaust gas filtration apparatus in which a ceramic fiber filter is provided on a channel of exhaust gas, an electric heater is provided at a entry port of the ceramic fiber filter, and a heat insulating material is provided so as to face the filter and move reciprocally in a direction orthogonal to the face thereof. This is a sectional view showing a state that the heat insulating material is brought close to the heater, the channel is closed, exhaust gas is blocked, and the heater is used to heat the filter for regeneration.

A filter 3 is provided at a posterior chamber 13 of a housing 1 so as to extend in a direction orthogonal with the flow. The filter 3 is composed of ceramic fibers F. It is held on both sides and supported by partitions 14, 14. The aerated face of the filter is retained from downstream by a breathable and appropriately strong support material, for example, a wire mesh or punching metal. It is noted that a breathable material which is small in thermal capacity and negligible in heat conduction loss outside the filter, for example, a wire mesh coarse in mesh and small in wire diameter, may be placed on the upstream face of the filter, thereby preventing the fraying of fibers after a prolonged use.

The filter 3 is made with ceramic fibers low in heat conductivity and relatively thick.

A portable heat insulating material 6 is provided at an anterior chamber 12 in front of the filter 3 so as to face the filter 3. The heat insulating material is composed of ceramic fibers F. The heat insulating material 6 is supported by a recessed metal retainer 52. An operating stick 53 is fixed to the retainer 52. The operating stick 53 is through a slide bearing 54 of the housing 1 and operated so as to move back and forth from the exterior. The operating stick 53 is operated to move the heat insulating material 6 back and forth, and channels are opened or closed, by which the heat insulating material 6, the operating stick 53, and retainer 52 serve as the on-off valve 5.

As illustrated in Fig. 7, when the operating stick 53 is pulled and the heat insulating material 6 is separated from the filter 3, a channel is opened, by which exhaust gas G flows into the filter 3 and particulate matter Z is filtered. The thus filtered clarified gas R goes out from a gas outlet 4. In this instance, no electricity is supplied to an electric heater 7.

When the pressure loss is increased, regeneration is carried out to remove the particulate matter. In the case of filter regeneration, the operating stick 53 is pushed in and a heat insulating material 6 is pushed directly near the electric heater 7. The electric heater 7 is covered with the filter 3 composed of ceramic fibers and the heat insulating material 6. A switch 9 is closed to supply electricity to the electric heater 7. Heat from the heater is used to burn particulate matter Z attached to the filter which is converted to carbon dioxide. Burned gas U is exhausted from a gas outlet 4.


[Embodiment 2]


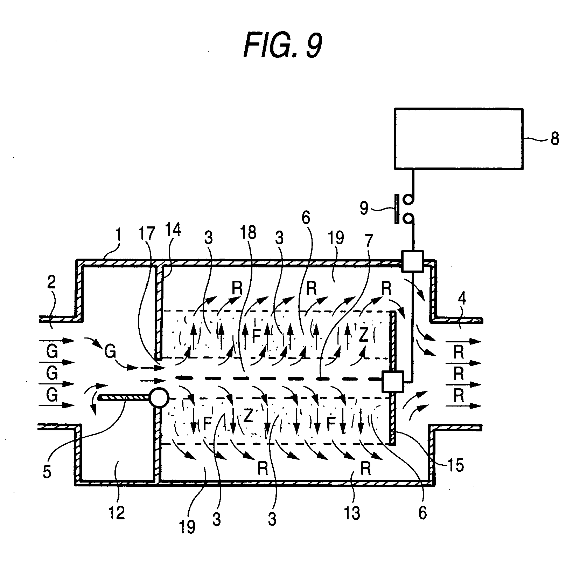

[Embodiment 2 (embodiment of the second invention: serving as heat insulating material and filter: Fig. 9, Fig. 10 and Fig. 11)]


Fig. 9 shows an embodiment of the second invention of the present invention. This is additional utilization of a breathable filter material having the heat insulating properties. A heat insulating material 6 in a first example of Embodiment 1 (Fig. 5, Fig. 6.) is given as a breathable filter material 3 itself. This example is similar to the effects shown in Fig. 5 and Fig. 6 but greater in filter area per volume. The breathable filter material maybe of a flat sheet structure having the cross section as illustrated. Alternatively, it may be in a co-axial cylindrical structure.

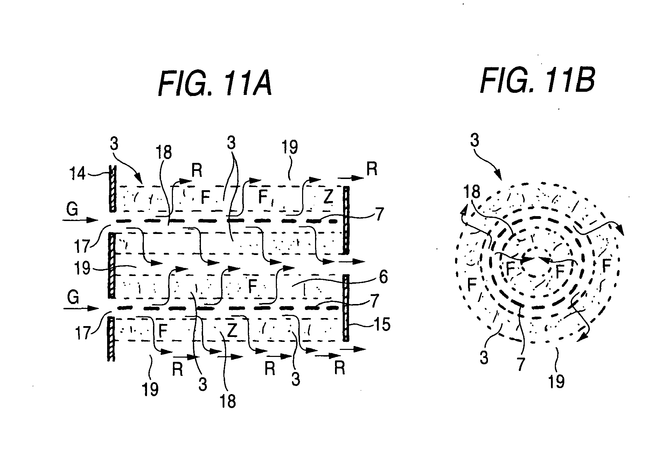

Further, the filter portion is provided with a double cylindrical structure as illustrated in Fig. 11, by which a filter area per volume can be made larger.

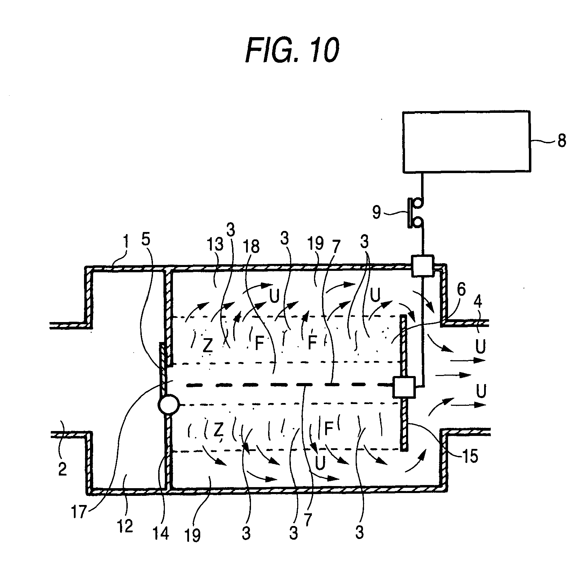

Fig. 9 illustrates a state of filtration, and Fig. 10 illustrates a state of regeneration. More specifically, Fig. 9 illustrates a third constitution of the present invention, that is, the exhaust gas filtration apparatus in which a cylindrical ceramic fiber filter is provided parallel with a channel of exhaust gas, an electric heater is provided at the center of the cylindrical ceramic fiber filter and an on-off valve is provided at a gas inlet. This is a sectional view showing a state that the on-off valve is opened, and exhaust gas is allowed to flow to the ceramic fiber filter which faces thereto (filtration) . Fig . 10 illustrates a third constitution of the present invention, that is, the exhaust gas filtration apparatus in which a cylindrical ceramic fiber filter is provided parallel with a channel of exhaust gas, an electric heater is provided at the center of the cylindrical ceramic fiber filter and an on-off valve is provided at a gas inlet. This is a sectional view showing a state that the on-off valve is closed, and exhaust gas is blocked, the heater is used to heat, burn and remove carbon microparticles, thereby regenerating the filter.

In Fig. 9 and Fig. 10, a longitudinal housing 1 is provided with a gas inlet 2, a gas outlet 4, an anterior chamber 12 and a posterior chamber 13. Two filters 3, 3 which extend in a longitudinal direction and oppose each other are provided at the posterior chamber 13. The filter 3 is constituted with ceramic fibers F poor in thermal conductivity and small in thermal capacity. The front end is supported by the partition 14, and the back end thereof is supported by the partition 15. The aerated face of the filter is retained from downstream by a breathable and appropriately strong support material, for example, a wire mesh or punching metal. It is noted that a breathable material which is small in thermal capacity and negligible in heat conduction loss outside the filter, for example, a wire mesh coarse in mesh and small in wire diameter, may be placed on the upstream face of the filter, thereby preventing the fraying of fibers after a prolonged use.

A filter entryport 17 is provided at the center of the partition 14. An on-off valve 5 for opening and closing the filter entry port is provided. An electric heater 7 is provided at a central space held between the filters 3, 3 which oppose each other. The heater electric source 8 is connected to the electric heater 7 through cords and a switch 9.

Fig. 9 shows procedures of the clarification. Exhaust gas G which contains particulate matter Z passes through the gas inlet 2, the anterior chamber 12 and the filter entry port 17, reaching the central space of the filter 3, from which the exhaust gas passes through a porous space of ceramic fibers on filters 3, 3 on both sides. The particulate matter Z is thus removed. The particulate matter Z gradually accumulates on the filters 3, 3. Clarified gas R goes out from the gas outlet 4.

Fig. 10 shows procedures of the regeneration. The filter entry port 17 is closed by the on-off valve 5. Then, the switch 9 is closed. Electricity is supplied from the heater electric source 8 to the electric heater 7. The heater is intensively heated. A temperature is elevated to oxidize and burn particulate matter Z. Burned gas U is discharged from the gas outlet 4.

This embodiment is that the filter 3 is provided with the heat insulating material 6 illustrated in Fig. 5 and Fig. 6. The filter is made with the same material and therefore similar in the heat-retaining effect. This constitution makes it possible to double the area of the filter.

Filters 3, 3 may be fabricated in a flat sheet form so as to oppose each other as illustrated in Fig. 5 and 6 (thickness, d; width, w; length, 1).

Alternatively, the filter may be fabricated in a cylindrical shape. An electric heater 7 can be installed at the center of the cylindrical filter. This structure is similar in sectional view to that illustrated in Fig. 9 and Fig. 10.

Alternatively, the filter may be fabricated in a double cylindrical shape, which is illustrated in Fig. 11. Fig. 11A is a longitudinal sectional view along the center line, and Fig. 11B is a sectional view intersecting the center line. This filter is of a double structure which is composed of an inner cylindrical filter 3, a cylindrical electric heater 7 and an outer cylindrical filter 3. The inner filter, the electric heater and the outer filter are structured in a concentric manner. The filter entry port 17 is in an annular shape. Upstream channels 18, 18 are also in an annular shape. Downstream channels 19, 19 are available in two, inside and outside. Exhaust gas is allowed to flow from a middle cylinder having an electric heater, filtered by the inner and outer filters and exhausted into channels inside and outside.

[Embodiment 3]

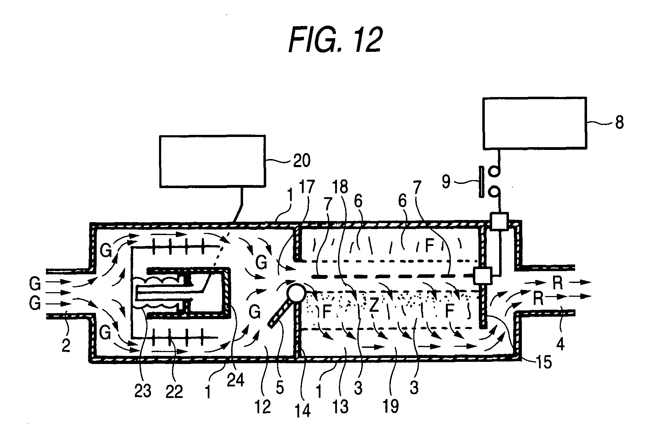

[Embodiment 3 (embodiment of the third invention; electrical charge): Fig. 12, Fig. 13, Fig. 14 and Fig. 15]

In these drawings, a corona discharge portion is provided as a charging element upstream in the filtration apparatus given in Fig. 5 and Fig. 6. Corona discharge is allowed to take place in gas, ions are supplied to the gas, and the ions are attached to particulate matter, by which particulate matter is electrically charged. In order to carry out corona discharge, corona discharge electrodes are arranged inside the apparatus. A high voltage is applied to the corona discharge electrodes, thereby forming a non-uniform electric field in the gas. The gas undergoes ionization in the vicinity of the corona discharge electrodes to supply ions. Therefore, capturing efficiency is significantly enhanced.

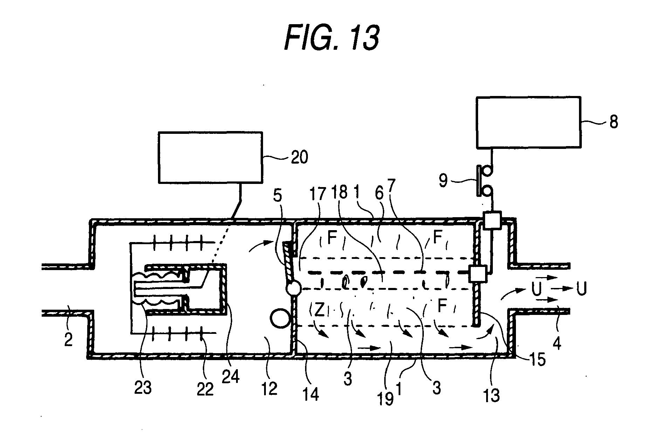

[Embodiment 3-1 (Fig. 12, Fig. 13)]

Fig. 12 and Fig. 13 show Embodiment 1 of the third invention of the present invention. Fig. 12 shows a state of filtration and Fig. 13 shows a state of regeneration. More specifically, Fig. 12 illustrates a fourth constitution of the present invention, that is, the exhaust gas filtration apparatus in which an charging element is provided at a front stage of a channel of exhaust gas so that microparticles of exhaust gas can be electrically charged by corona discharge, a ceramic fiber filter is provided at a rear stage of a channel of exhaust gas so as to be parallel with the channel, a heat insulating material of ceramic fibers is fixed so as to face the filter, an electric heater is provided between the ceramic fiber filter and the heat insulating material and an on-off valve is provided at an gas inlet. This is a sectional view showing a state in which the on-of f valve is opened, electrically charged exhaust gas is allowed to flow to the ceramic fiber filter which faces thereto, and particulate matter is filtered. Fig. 13 illustrates a fourth constitution of the present invention, that is, the exhaust gas filtration apparatus in which an charging element is provided at a front stage of a channel of exhaust gas so that microparticles of exhaust gas can be electrically charged by corona discharge, a ceramic fiber filter is provided at a rear stage of a channel of exhaust gas so as to be parallel with the channel, a heat insulating material of ceramic fibers is fixed so as to face the filter, an electric heater is provided between the ceramic fiber filter and the heat insulating material and an on-off valve is provided at an gas inlet. This is a sectional view showing a state in which the on-off valve is closed, electricity is supplied to the electric heater, the filter is heated to burn and remove carbon microparticles accumulated thereon, and the filter is regenerated.

This embodiment is that a charging element is provided at the anterior chamber 12 of the filtration apparatus given in Fig. 5 and Fig. 6. A filter 3 which is retained by partitions 14, 15 to extend in a longitudinal direction and a heat insulating material 6 which faces thereto are provided at the posterior chamber of a housing 1. This is the same as the apparatus given in Fig. 5 and Fig. 6 in that an on-off valve 5 for opening and closing a filter entry port 17 is provided and an electric heater 7 is arranged in close proximity to the filter 3 and the heat insulating material 6.

The above embodiment is different in that a charging element 24 is newly provided at the anterior chamber 12. An external corona discharge electrode 22 is insulated and supported by a high-voltage insulator 23 at the center, and an inner electrode receives a negative direct-current high voltage from a high-voltage electric source 20.

Exhaust gas G which contains particulate matter Z introduced from the gas inlet 2 is subjected to electrical charge by a charging element and converted into electrically charged particulate-matter-containing gas G'. This gas flows from the filter entry port 17 to filters 3, 3. Filtration of particulate matter by the filters and regeneration in which a channel is closed and the filters are heated by an electric heater to burn and remove particulate matter are carried out similarly as with the apparatus given in Fig. 5 and Fig. 6.

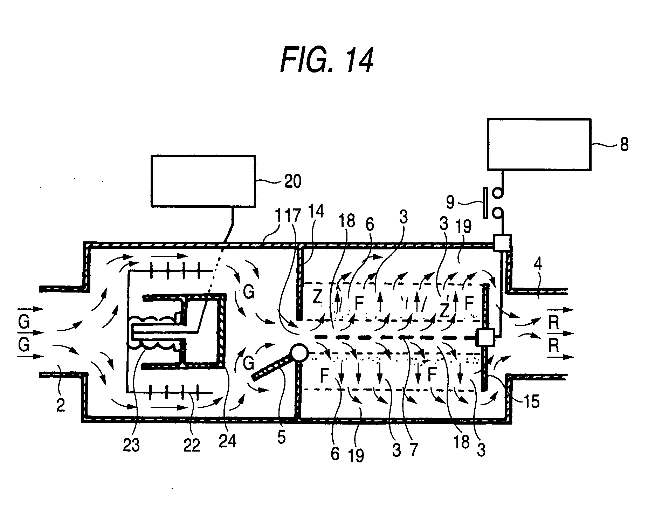

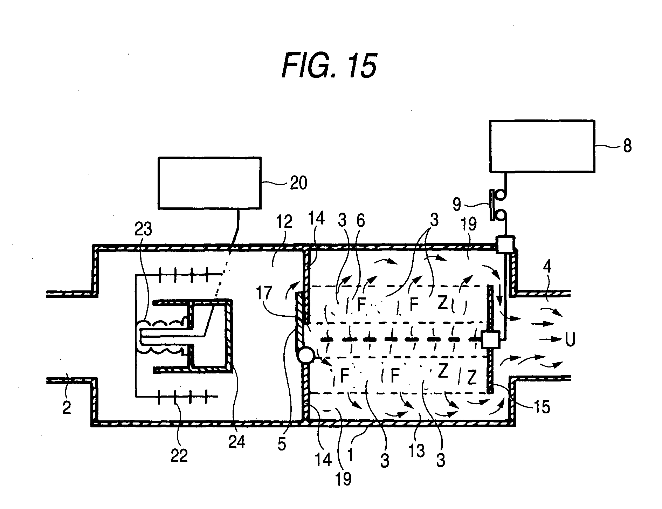

[Embodiment 3-2 (Fig. 14, Fig. 15)]

Fig. 14 and Fig. 15 show Embodiment 2 of the third invention of the present invention. More specifically, Fig. 14 illustrates a fifth constitution of the present invention, that is, the exhaust gas filtration apparatus in which an charging element is provided at a front stage of a channel of exhaust gas so that microparticles of exhaust gas can be electrically charged by corona discharge, a cylindrical ceramic fiber filter is provided at a rear stage of a channel of exhaust gas so as to be parallel with the channel, an electric heater is provided at the center of the ceramic fiber filter and an on-off valve is provided at an gas inlet. This is a sectional view showing a state in which the on-off valve is opened, electrically charged exhaust gas is allowed to flow to the cylindrical ceramic fiber filter, and particulate matter is filtered. Fig. 15 illustrates a fifth constitution of the present invention, that is, the exhaust gas filtration apparatus in which an charging element is provided at a front stage of a channel of exhaust gas so that microparticles of exhaust gas can be electrically charged by corona discharge, a cylindrical ceramic fiber filter is provided at a rear stage of a channel of exhaust gas so as to be parallel with the channel, an electric heater is provided at the center of the ceramic fiber filter and an on-off valve is provided at an gas inlet. This is a sectional view showing a state in which the on-off valve is closed, electricity is supplied to the electric heater, the filter is heated to burn and remove carbon microparticles accumulated thereon to regenerate the filter.

This embodiment is that a charging element is provided at the anterior chamber 12 of the filtration apparatus given in Fig. 9 and Fig. 10. Two filters 3, 3 which are retained by partitions 14, 15 to extend in a longitudinal direction are provided at the posterior chamber of a housing 1. The electric heater 7 is provided between these filters. The on-off valve 5 is provided at the filter entry port 17, by which filtration and regeneration are switched. This is the same as with the apparatus given in Fig. 9 and Fig. 10.

A difference is that a charging element 24 is newly provided at the anterior chamber 12. The external corona discharge electrode 22 is insulated and supported by the high voltage insulator 23 at the center, and the internal electrode receives a negative direct-current high voltage from the high voltage electric source 20.

Exhaust gas G which contains particulate matter Z introduced from the gas inlet 2 is electrically charged by a charging element and converted to electrically charged particulate-matter-containing gas G'. This gas flows from the filter entry port 17 to filters 3, 3. Filtration of particulate matter by the filters and regeneration in which a channel is closed and the filters are heated by an electric heater to burn and remove particulate matter are carried out similarly as with the apparatus given in Fig. 9 and Fig. 10.

The corona discharge electrode 22 includes a general-type electrode, for example, that in which a thin-wire electrode and plate with sharp projection structures are combined.

It is desirable to use a corona discharge electrode having projected structures made with a metal such as stainless steel excellent in heat resistance and corrosion, if used in an environment of high temperature, vibration and corrosion such as the treatment of exhaust gas from a diesel engine.

If the distance between the electrodes is given at about 20 mm to 50 mm (0.02 m to 0.05 m) and the curvature radius of the leading end of the projection is given at 0.5 mm or less and preferably at about 0. 2 mm or less, a voltage of 20 kv or less is applied to generate a practical corona discharge.

The applied voltage includes direct current voltage, alternative current voltage and pulse voltage. Among other things, a negative electrode-derived direct current voltage is relatively high in electrical charge effect.

Regarding electricity consumed by corona discharge, electricity of about 50 W or less is able to provide a diesel engine having a displacement volume of 5L (liter) with an effect to be described later.

A description will be made for the effect obtained by providing a charging element by referring to an example where a corona discharge portion based on a negative electrode-derived direct current corona discharge is provided upstream.

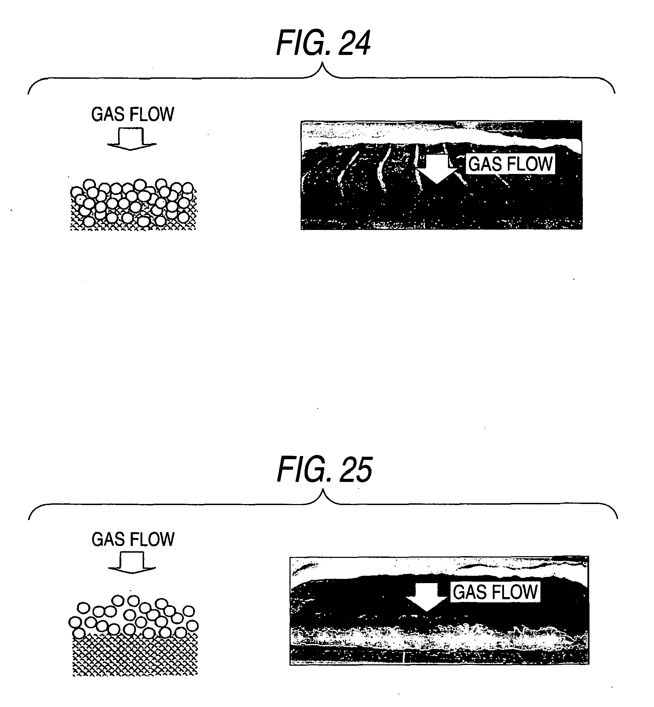

Evaluation was made for a change in mode of particulate matter captured at the time of filter filtration of exhaust gases from a diesel engine with the displacement volume of 5L (liter) running at 2000 rpm, depending on the presence or absence of a charging element. The results are shown in Fig. 24 and Fig. 25. The photograph at the right of Fig. 24 is a photograph of the cross section of a filter after a prolonged use for showing a state of accumulated particulate matter on the filter when exhaust gas is filtered by the apparatus free of a charging element. This drawing shows a deep filtration at which particulate matter reaches deep at the filter. The photograph at the right of Fig. 25 is a photograph of the cross section of a filter after a prolonged use for showing a state of accumulated particulate matter on the filter when electrically charged microparticle-containing exhaust gas is filtered by the apparatus having a charging element. This drawing shows a surface filtration at which particulate matter will not reach deep due to repulsion and remain on the surface. Formed is a clearance between particles where gas flows due to the repulsion between particles by electrical charge, and the rate of increase in the pressure loss is suppressed.

The charging element used here is a coaxial cylindrical corona discharge tube in which eight pieces of circular tubes with an inner diameter of 60 mm (0.06 m) are arranged parallel around one high-voltage supplying insulator for generating corona discharge and an electrode with projections having an effective electrical discharge length of about 80 mm (0. 08 m) (curvature radius of leading end of the projection, 0.2 mm) is arranged on a central axis of each of the circular tubes. The circular tubes are of ground potential. A negative electrode-derived direct current voltage of about 13 kV to 15 kV is applied to the electrode with the projection, thereby generating a negative corona discharge inside the circular tubes. An electric current for corona discharge is about 3 mA.

Where a charging element is not provided, particulate matter is captured deep into a filter. The filter traps particulate matter in a mode of deep-bed filtration.

Where a charging element is provided, particulate matter is trapped on the surface of a filter. The filter traps particulate matter in a mode of surface filtration, a reason of which has already been explained.

Where a filter is heated and regenerated, there is a temperature distribution inside the filter that the highest temperature is found on the heated surface and temperatures are lowered accordingly toward downstream. Where a charging element is provided, particulate matter is trapped in a concentrated manner on a face where the temperature is higher at the time of heating. As illustrated in Fig. 3 and Fig. 4, it is possible to regenerate the filter in a shorter heating time. In other words, less thermal energy is consumed for filter regeneration.

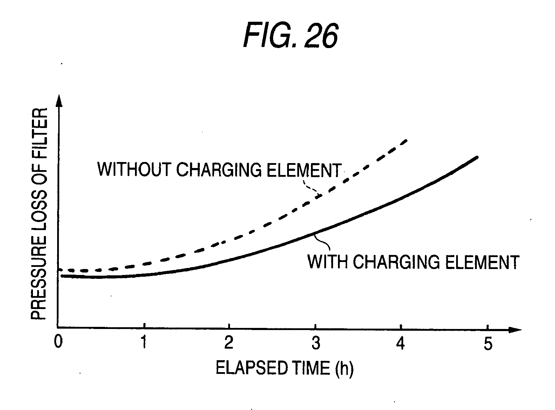

Fig. 26 is a graph illustrating a relationship between the filtration elapsed time depending on the presence or absence of a charging element and the increase in filter pressure loss in the apparatus for filtering particulate matter-containing exhaust gas by using a ceramic fiber filter. The horizontal axis indicates time, and the vertical axis indicates filter pressure loss. The dashed line indicates a case where electrical charge is not carried out, and the solid line indicates a case where electrical charge is carried out. As illustrated in Fig. 26, a charging element is provided, by which the rate of increase in the pressure loss of the filter can be suppressed. Therefore, it is possible to make the regeneration cycle longer.

In terms of time average, it is possible to further decrease thermal energy which requires filter regeneration.

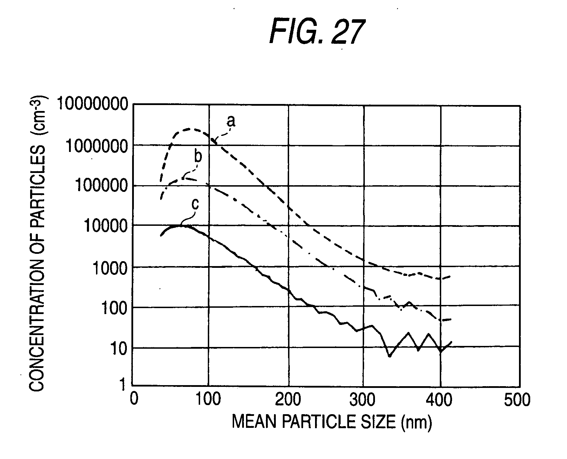

Fig. 27 shows measurement results of the mean particle size and particle density distribution of particulate matter in gas. The horizontal axis indicates the mean particle size (nm) of particulate matter, and the vertical axis indicates the concentration , distribution of their particle size ($cm^{-3}$). In Fig. 27, "a" shows a distribution of the mean particle size of particulate matter contained in exhaust gas prior to treatment and the concentration of particles having the particle size. "b" shows a distribution of the mean particle size of particulate matter contained in exhaust gas after being treated by the apparatus without a charging element and the concentration of particles having the particle size. "c" shows a distribution of the mean particle size of particulate matter contained in exhaust gas after being treated by the apparatus with a charging element and the concentration of particles having the particle size. The particle size of about 70 nm to 90 nm is found greatest in the gas. There is a decrease in concentration with an increase in particle size. Where filtration is carried out by using the apparatus of the present invention without the charging element, there is a decrease in concentration of particles to about 1/10. Where filtration is carried out by using the apparatus with the charging element, there is a decrease in concentration of particles to about 1/200.

The concentration of particles with a diameter of 80 nm in exhaust gas G before treatment is $4 \times 10^6$ $cm^{-3}$. Where filtration is carried out by a filter without a charging element, the concentration of particles with a diameter of 80 nm is $2 \times 10^5$ $cm^{-3}$. Where filtration is carried out by a filter having a charging element, the concentration of particles with a diameter of 80 nm is $10^4$ $cm^{-3}$. The apparatus having the charging element is decreased in particle number to about 1/20, as compared with the apparatus without the charging element. In other words, the charging element is provided, by which capturing efficiency of particulate matter can be remarkably improved.

[Embodiment 4]

[Embodiment 4 (embodiment of the fourth invention)]

A description will be made for an embodiment of the fourth invention.

This embodiment is that in the above-described Embodiment 1 to 3, a ratio, k/d (unit, $W/m^2K$)) of the heat conductivity of heat-insulating breathable filter material, k (unit, W/mK) to the thickness, d (unit,m) is $50W/m^2K$ or less (formula (7)), more preferably $20 W/m^2K$ or less (formula (8)) and a product, ρcd (unit, $J/m^2K$) of the bulk density of breathable filter material, ρ (unit, k $g/m^3$), the specific heat, c (unit, J/kgK) and the thickness, d (unit, m) satisfies the formula (1) and more preferably the formula (2). These formulae (1) and (2) have already been explained in detail regarding meaning.

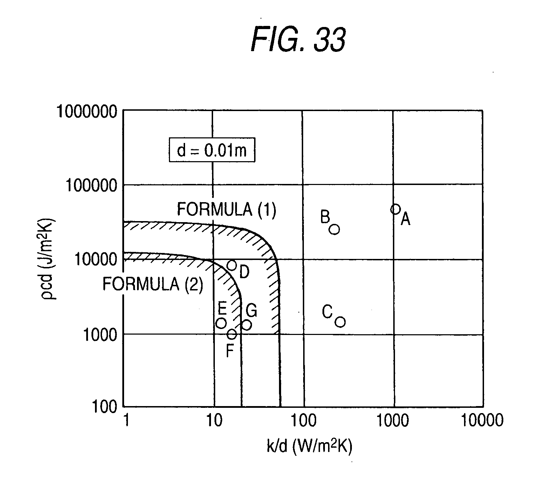

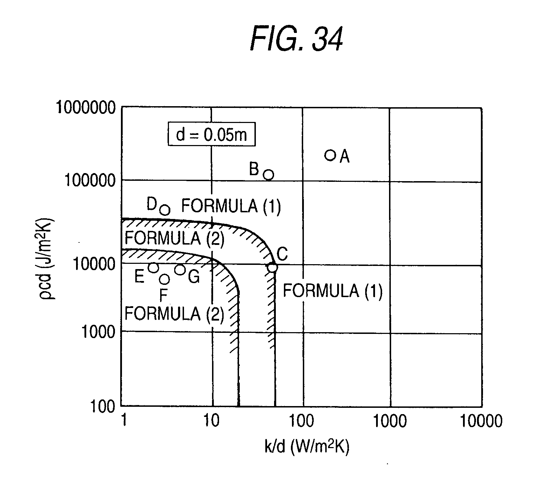

Fig. 33 and Fig. 34 illustrate the conditions of the formulae (7) and (1) and those of the formula (8) and (2) in which the horizontal axis indicates k/d and the vertical axis indicates pcd.

Table 1 shows the bulk density, ρ; specific heat, c; heat conductivity, k of representative heat-resistant materials usable even at a high temperature region as illustrated in Fig. 3 and Fig. 4. Physical values are temperature-dependent, and, in this instance, representative values obtained at 500°C or 1000°C are shown such as those described in brochures and the like. They are not necessarily physical values measured at an operating temperature of the present invention.

Calculations based on the relationship of k/d and pcd of individual materials by referring to values shown in Table 1 are plotted together in Fig. 33 and Fig. 34.

Fig. 33 shows calculation results obtained by using a filter with a thickness of d=0.01m. Fig. 34 shows those obtained by using a filter with a thickness of d=0.05m. Adequacy of the filters can be simply evaluated by referring to these drawings.

[Table 1]

| Physical values of representative heat-resistant materials | | | | |
|---|---|---|---|---|
| Name | Types | Bulk density ρ ($kg/m^3$) | Specific heat c (J/kgK) | Heat conductivity k (W/mK) |
| A | alumina (bulk) | 3850 | 1181 | 10.4 |
| B | quartz glass (bulk) | 2190 | 1120 | 2.17 |
| C | silicon carbide-based ceramic fiber felt | 200 | 709 | 2.5 |
| D | alumina/silica/boria based ceramic fiber woven fabric | 768 | 1050 | 0.16 |
| E | alumina silica based ceramic fiber blanket | 130 | up to 1050 | 0.12 |
| F | silica-based ceramic fibers 1 blanket | 96 | up to 1000 | 0.16 |
| G | silica-based ceramic fibers 2 blanket | 128 | up to 1000 | 0.24 |

Fig. 33 and Fig. 34 show values of k/d and those of pcd relative thereto under the conditions of d=0.01m and d=0.05m in the materials shown in Table 1, that is, A, B, C, D, E, F and G. The horizontal axis indicates k/d ($W/m^2K$) and the vertical axis indicates pcd ($J/m^2K$). The upper reversed L-letter shaped graph gives an upper limit to pcd resulting from an inequality in the formula (1). The lower reversed L-letter graph gives an upper limit to pcd resulting from an inequality in the formula (2) . The vertical portions of the graphs represent limits of k/d such as $k/d \leq 50 W/m^2K$ and $k/d \leq 20 W/m^2K$. Fig. 33 shows that samples, A, B and C, are found not to be appropriate, samples, D, E, F and G, satisfy the formula (1) and samples E and F, satisfy the formula (2) as well. Fig. 34 shows that samples, A, B and D, are found not to be appropriate, samples, C, E, F and G, satisfy the formula (1), and samples, E, F and G, satisfy the formula (2) as well.

That is, as illustrated in Fig. 33 and Fig. 34, bulk materials such as alumina (A) and quartz glass (B) are unable to satisfy the formulae (7) and (1) at the same time. This is because the bulk density is excessively great and the heat conductivity is excessively high. After these bulk materials are treated so as to make them breathable, the bulk density and the heat conductivity are still excessively great and not appropriate in fabricating a filter of the present invention.

Bulk materials are not usable in fabricating a filter of the present invention. Only materials much lower in heat conductivity than that of bulk materials and small in bulk density can be appropriately usable in fabricating a filter of the present invention. Ceramic fibers are a representative material which can satisfy the above conditions.

Ceramic fibers are available in various types such as silicon carbide (SiC)-based, alumina/silica/boria-based, alumina/silica-based and silica based fibers.

Silicon carbide-based ceramic fibers (C) are not practically usable, because they are relatively high in heat conductivity and excessively high in watt density necessary for temperature elevation where a thin filter is used. Further, silicon carbide-based ceramic fibers do not satisfy the requirements by the present invention unless a filter is made thick at 0.05 m or more.

If silicon carbide-based ceramic fibers are used to change the composition of fibers, thereby providing a material smaller in heat conductivity and equal or lower in bulk density than those values shown in Table 1 and excellent in breathability, a filter can be made thinner and the apparatus can be made more compact.

Since alumina/silica/boria-based ceramic fiber woven fabric (D) is great in bulk density although low in heat conductivity, it requires a slightly longer temperature elevating time. If alumina/silica/boria-based ceramic fibers are used to change a processing method of fibers, thereby a breathable material can be formed which is equal or lower in heat conductivity and lower in bulk density than those values shown in Table 1, the temperature elevating time can be made shorter. Therefore, the apparatus better in thermal efficiency can be provided.

Alumina/silica-based ceramic fiber blanket (E) and silica-based ceramic fiber blankets (F, G) are, as illustrated in Table 1, low in heat conductivity and small in bulk density. Even where the thickness, d, is in a range of 0.01 m to 0.05 m, a filter can sufficiently satisfy the conditions of the present invention. The filter also can satisfy the requirements of the formulae (8) and (2) which are particularly preferable conditions.

Therefore, in view of decreasing the thermal energy necessary for heating and regeneration and also in view of making the apparatus compact, alumina/silica-based ceramic fiber blanket (E) and silica-based ceramic fiber blankets (F, G) are superior to silicon carbide-based ceramic fiber felt (C) and alumina/silica/boria-based ceramic fiber woven fabric (D).

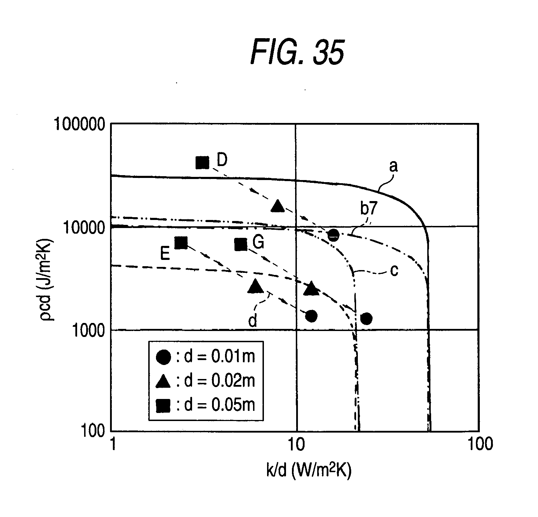

Fig. 35 shows a case where in Fig. 33 and Fig. 34, curves obtained at a temperature elevating time of 100 seconds (sec) (300 given in the formula (15) is replaced by 100) are plotted together in Fig. 33 and Fig. 34.

In Fig. 35, "a" curve indicates an upper limit of pcd in which a temperature can be elevated by 500K at $Q/S = 25$ kW/$m^2$ within 300 sec. "b" curve indicates an upper limit of pcd in which a temperature can be elevated by 500K at $Q/S = 25$ kW/$m^2$ within 100 sec. "c" curve indicates an upper limit of pcd in which a temperature can be elevated by 500K at $Q/S = 10$ kW/$m^2$ within 300 sec. "d" curve indicates an upper limit of pcd in which a temperature can be elevated by 500K at $Q/S = 10$ kW/$m^2$ within 100 sec.

The most severe conditions are imposed on "d" curve, in which a temperature is elevated by 500°C (°C is regarded to be the same as K because of an increased portion) at the heating density of 10 kW/$m^2$ within 100 seconds.

Only the materials E (d=0.02m, d=0.01m) and the material G (d=0.02m) are found below "d" curve, and only these three materials satisfy the above conditions (10 kW/$m^2$, 100 seconds).

In addition to these three materials, the material E (d=0.05mn) and the material G (d=0.05m) are added below "c" curve (10 kW/$m^2$, 300 seconds).

In addition to the above five materials, the material G (d=0.01 m) and the material D (d=0.01m) are found below "b" curve (25 kW/$m^2$, 100 seconds).

In addition to the above seven materials, the material D (d=0.02 m) is found below "a" curve (25 kW/$m^2$, 300 seconds).

As apparent from this drawing, alumina/silica-based ceramic fiber blanket and silica-based ceramic fiber blanket having values of p, c and k as shown in Table 1 are carefully selected for the filter thickness, d, thereby making it possible to provide a temperature elevation of 500k at a practically desirable watt density 10 kW/$m^2$ within 100 seconds ("d" curve ).

The alumina/silica-based ceramic fiber blanket includes, for example, the SC blanket 1260 (product name) available from Shinnikka Thermal Ceramics Corporation or the Isowool 1260 blanket from Isolite Insulating Products Co., Ltd. as described previously.

The silica-based ceramic fiber blanket includes commercially-available biodegradable fiber blankets (a detailed description will be made in an embodiment of the fifth invention) .

In view of the clarification performance of particulate matter, a filter thickness d of about 0.01 m or more will be sufficient. The thickness can be selected appropriately, with consideration given to the watt density and the temperature elevating time necessary for a heating element among characteristics given in Fig. 33 and Fig. 34.

Alumina/silica-based ceramic fiber blankets and silica-based ceramic fiber blankets with a thickness d of 0.006 m to 0.05 m are commercially available as a heat insulating material. Those having a thickness d of about 0.006 m, 0.013 m, 0.025 m or 0.05 m are usually available. It is preferable to use blankets having a thickness d of about 0.013 m to 0.025 m.

The alumina/silica-based ceramic fiber blankets and silica-based ceramic fiber blankets exemplified here are lower in price than the silicon carbide-based ceramic fiber felt and alumina/silica/boria-based ceramic fiber woven fabric shown in Table 1. Alumina/silica-based ceramic fiber blankets and silica-based ceramic fiber blankets are used as a filter, thereby making it possible to provide an apparatus improved in economic efficiency.

Alumina/silica-based ceramic fiber blankets and silica-based ceramic fiber blankets are soft in material quality and can be changed in thickness when they are formed into a sheet, depending on a fixing manner and resistance of gas flow.

As illustrated in Fig. 33, Fig. 34 and Fig. 35, these ceramic fiber blankets are relatively wide in range for d, which satisfies the conditions of the formulae (7) and (8) (in this example, d= 0.01m to 0.05m). Therefore, materials may be appropriately selected for an initial thickness or there may be provided an appropriate allowance for designing the watt density and the temperature elevating time of a heating element so as to cope with the change in thickness in association with the above use conditions.

[Embodiment 5]

[Embodiment 5 (embodiment of the fifth invention)]

A description will be made for an embodiment of the fifth invention.
This embodiment is that in the above Embodiments 1 to 4, ceramic fibers of a breathable ceramic fiber filter are biodegradable ceramic fibers.

Biodegradable fibers are defined by EU Directive 97/69/EC to satisfy any one of the following.

(1) An *in vivo* retention test on short-term inhalation has confirmed that fibers longer than 20 $\mu$m have a loading half-life period of less than 10 days.

(2) An *in vivo* short-term retention test by injection into the body has confirmed that fibers longer than 20 $\mu$m have a loading half-life period of less than 40 days.

(3) An intraperitoneal injection test has confirmed that there is no evidence of excessive carcinogenicity.

(4) A long-term inhalation test has confirmed that there is no change in related pathogenecity or neoplastic change.

Representative biodegradable ceramic fibers include those mainly based on silicon dioxide (silica), magnesium oxide (MgO) or those mainly based on silicon dioxide (silica), magnesium oxide (MgO) and calcium oxide (CaO).

More specifically, these are SUPERWOOL (trademark) available from Shinnikka Thermal Ceramics Corporation, ISOFRAX (trade mark), and INSULFRAX (trade mark) from UNIFRAX Corporation (USA).
A maximum working temperature is 1000°C or more in any of them, with the fiber diameter being 3 to 5$\mu$m and the fiber length being about 30 mm.

Commercially-available biodegradable ceramic fibers in a blanket form are those with a bulk density of 96 kg/m$^3$, 128 kg/m$^3$ and 160 kg/m$^3$.

The heat conductivity is in a range of 0.14 W/mK to 0.24 W/mK at 600°C and 0.19 W/mK to 0.37 W/mK at 800°C.

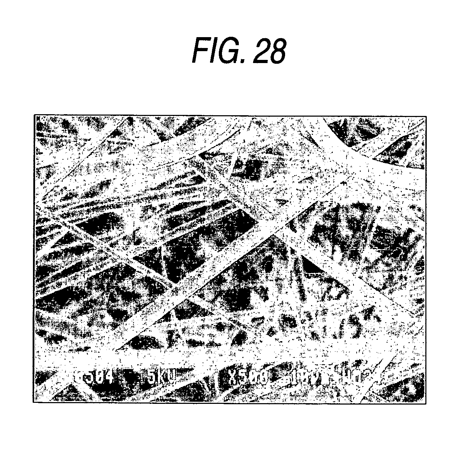

Fig. 28 shows an electron microscope photograph of the ISOFRAX (trade mark) blanket available from UNIFRAX Corporation (USA).

[Embodiment 6]

[Embodiment 6 (embodiment of the sixth invention)]

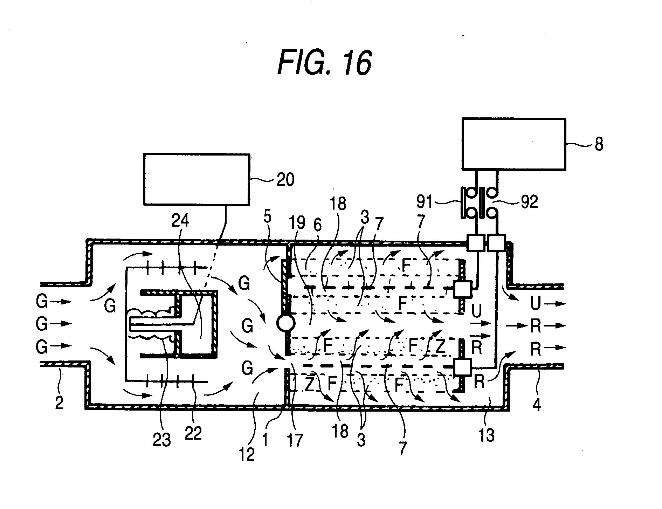

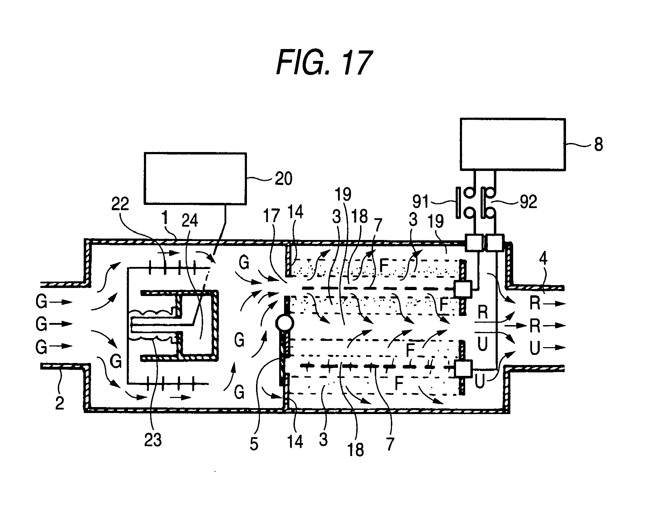

[Embodiment 6-1 (Fig. 16, Fig. 17)]

Fig. 16 and Fig. 17 show a first embodiment of the sixth invention of the present invention. More specifically, Fig. 16 illustrates a sixth constitution of the present invention, that is, the exhaust gas filtration apparatus in which an charging element is provided at a front stage of a channel of exhaust gas so that microparticles of exhaust gas can be electrically charged by corona discharge, two cylindrical filters composed of ceramic fibers are provided parallel to each other at a rear stage of a channel of exhaust gas so as to be parallel with the channel, an electric heater is provided at the centers of the respective filters composed of ceramic fibers, and an on-off valve which opens and closes selectively is provided at gas inlets of these two filters. This is a sectional view showing a state in which the on-off valve is operated, one (lower) filter is used to flow electrically charged exhaust gas to the cylindrical ceramic fiber filter, filtering particulate matter, the other (upper) filter is blocked from the channel, supplying electricity to the heater, and particulate matter accumulated thereon is burned to regenerate the filter. Fig. 17 illustrates a sixth constitution of the present invention, that is, the exhaust gas filtration apparatus in which an charging element is provided at a front stage of a channel of exhaust gas so that microparticles of exhaust gas can be electrically charged by corona discharge, two cylindrical filters composed of ceramic fibers are provided parallel to each other at a rear stage of a channel of exhaust gas so as to be parallel with the channel, an electric heater is provided at the centers of the respective filters composed of ceramic fibers, and an on-off valve which opens and closes selectively is provided at gas inlets of these two filters. This is a sectional view showing a state in which the on-off valve is operated, one (upper) filter is used to flow electrically charged exhaust gas to the cylindrical ceramic fiber filter, filtering particulate matter, the other (lower) filter is blocked from the channel, supplying electricity to the heater, and particulate matter accumulated thereon is burned to regenerate the filter.

A housing 1 is provided with a gas inlet 2, a gas outlet 4, an anterior chamber 12 and a posterior chamber 13. The anterior chamber 12 is provided with a charging element 24 which includes a corona discharge electrode 22, a high-voltage electric source 20 and a high-voltage insulator 23. The posterior chamber 13 is provided with two cylindrical filters 3, 3 parallel to an axial line. A partition 14 is provided with two filter entry ports 17, 17. An on-off valve 5 is able to close either of the two filter entry ports 17, 17. There is provided an upstream channel 18 subsequent to the entry port 17. This channel is also available in two. Downstream channels 19, 19 are provided outside the cylindrical filters 3, 3. Electric heaters 7, 7 are provided at the center of filter units 3, 3. Two pairs of cords are extended from an electric source 8 of the heater, and provided are two switches 91, 92.

In Fig. 16, the entry port 17 of the upper filter unit 3 is closed by the on-off valve 5. A switch 91 is closed to generate a thermal energy on the electric heater 7. Particulate matter Z on the filter 3 is heated and burned by this energy. Burned gas U is exhausted from the gas outlet 4. The entry port 17 of the lower filter unit is opened. The electric heater 7 is kept off. Exhaust gas G is electrically charged by a charging element 24 and the electrically charged gas G' enters into the lower filter 3. Particulate matter Z is filtered and removed by the filter 3. Clarified gas R is exhausted from the gas outlet 4.

In Fig. 17, the entry port 17 of the lower filter unit 3 is closed by the on-off valve 5. The electric heater 18 is electrified and heated by the lower filter unit. Particulate matter Z attached to the filter 3 is heated and burned. Burned gas U is exhausted from the gas outlet 4. The upper filter unit is involved in filtration.

In this embodiment, two filter units 3, 3 are incorporated, and all the units are not regenerated at the same time (an operation in which the valve of the filter unit is closed to carry out heater regeneration) but at least one of the filter units is allowed to flow gas continuously. One unit is used for clarification and the other unit is used for regeneration, thereby making it possible to clarify exhaust gas constantly.

For example, regeneration is carried out alternately, thereby making it possible to clarify gas continuously without halting the gas supply.

Timing when individual filters are subjected to regeneration may be decided appropriately by control with a timer or that in association with a running state of the engine, depending on applications.

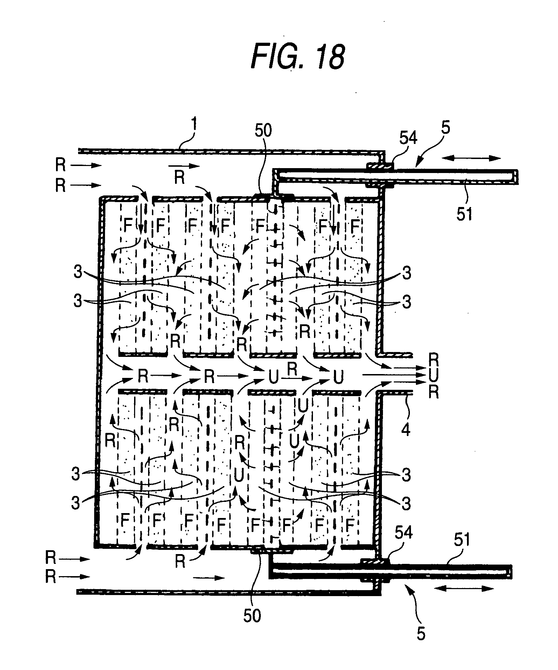

[Embodiment 6-2 (Fig. 18)]

For example, a diesel engine is assumed to have the displacement volume of 5L (litter) (0.005 m³), the engine is to rotate at 3000 rpm and the exhaust temperature is to be 450°C. The exhaust air flow is assumed to be about 18.5 m³/min (= 0.308 m³/s).

In order for the linear velocity of gas flow at a filter portion to give about 1 m/s or less, a filter area may be given at about 0.3 m².

In this instance, if the watt density of a heating element for heating and regenerating a filter is assumed to be a practical level of about 10 kW/m², necessary electricity will be about 3 kW.

Where a filter is installed on a diesel vehicle and a general-purpose battery is used as an electric source to heat and regenerate the filter by an electric heater, it is desirable to keep the electricity requirement less than about 1 kW, although the electricity is used temporarily only at the time of heating and regeneration.

As a result, a method is adopted in which, for example, a filter is composed of three or more units, each of the filter units is provided with a capturing area of about 0.1 m² or less, a selector valve is used to delay the timing so that the filter units are sequentially heated and regenerated, thereby making it possible to decrease the electricity necessary at the time of regeneration to about 1 kW or less as the apparatus in its entirety. Fig. 18 shows another embodiment of the sixth invention. More specifically, Fig. 18 illustrates a seventh constitution of the present invention, that is, the exhaust gas filtration apparatus in which two donut-type filters composed of ceramic fibers are allowed to face each other in conformity with the axis of a housing, an electric heater is arranged therebetween, which is given as one filter unit, and four filter units thus constituted are arranged in a direction axially of the housing. One filter unit is provided with an annular (ring form) gas flowing port at an outer periphery or a total of four annular (ring form) gas flowing ports, and an annular on-off valve is provided which slides on the faces of these four annular exhaust gas flowing ports. In the exhaust gas filtration apparatus, the on-off valve is moved to close any one of flowing ports of plural filters, while exhaust gas is flowed to other filters, particulate matter is captured from exhaust gas to accumulate particulate matter, in a filter at which the flowing port is closed by the on-off valve, electricity is supplied to the electric heater, thereby burning and removing the accumulated carbon microparticles to regenerate the filter.

In this embodiment, four donut-type filter units are arranged in a direction axially of a housing. One filter unit is composed of two donut-type filters which face each other, and an electric heater is provided on the clearance thereof. This filter unit is accommodated into a cylindrical partition, and four annular (ring form) gas inlets are provided on the circumference of the cylinder. An on-off valve is a ring-formed lid plate large enough to keep one of the gas inlets closed. The on-off valve is a slide type in which the lid plate moves back and forth linearly on an outer periphery of the cylinder. The on-off valve is composed of a lid plate 50, an operating stick 51 for allowing the lid plate 50 to move linearly and a slide bearing 54 mounted on the housing 1. The operating stick 51 is retained by the slide bearing 54 and able to move back and forth axially in parallel. The lid plate 50 is able to close any one of the entry ports 17 of the four filter units.

In this embodiment, the third filter unit from the left is closed, and the electric heater of the filter unit concerned generates heat, thereby burning particulate matter. The remaining first, second and fourth filter units are opened for a gas inlet, into which exhaust gas G flows. When passing through the filter 3, particulate matter is filtered by the filter 3. Clarified gas R and burned gas U are exhausted from the gas outlet 4. Of these four filter units, three units are in progress of filtration, and one unit is in progress of regeneration. Therefore, exhaust gas is treated continuously.

The on-off valve may be actuated by an air cylinder or a gear mechanism. Filter regeneration is carried out only in one filter unit. A filter unit to be regenerated is changed sequentially, thereby making it possible to clarify gases continuously.

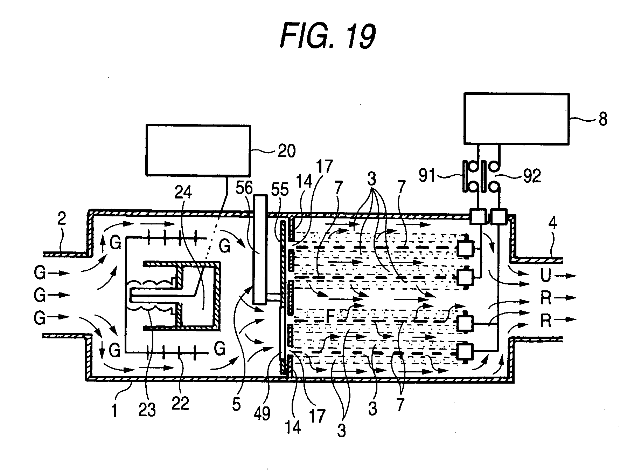

[Embodiment 6-3 (Fig. 19, Fig. 20, Fig. 21)]

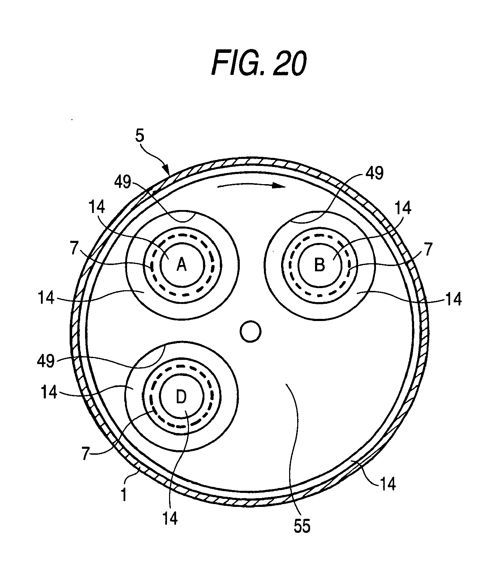

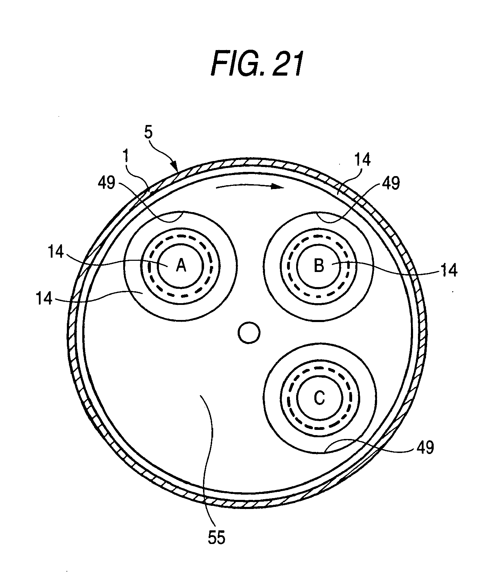

Fig. 19 through Fig. 21 show a third embodiment of the sixth invention. Fig. 19 illustrates an eighth constitution of the present invention, that is, the exhaust gas filtration apparatus in which an charging element is provided at a front stage of a channel of exhaust gas so that microparticles of exhaust gas can be electrically charged by corona discharge, four double-cylindrical filters composed of ceramic fibers are provided parallel to each other at a rear stage of a channel of exhaust gas so as to be parallel with the channel, an electric heater is provided at the centers of the respective filters composed of ceramic fibers, and a rotating slide-type on-off valve is provided at four gas inlets of these four filters. This is a sectional view showing a state inwhich the rotating slide-type on-off valve is operated, three filters are used to flow electrically charged exhaust gas to the cylindrical ceramic fiber filter, filtering particulate matter, one (upper) filter is blocked from the channel, supplying electricity to a heater, and particulate matter accumulated thereon is burned to regenerate the filter. Fig. 20 and Fig. 21 are left side drawings illustrating motions of a rotating slide-type on-off valve in an eighth constitution of the present invention having the four filter units A, B, C and D in Fig. 19. In Fig. 20, three openings of the rotating slide-type circular plate coincide with filter units A, B and D, the filter units A, B and D are in progress of filtration of exhaust gases. The filter unit C is closed by a blind plate of the on-off valve, the filter unit C is heated to burn and remove particulate matter. In Fig. 21, three openings of the rotating slide-type circular plate coincide with filter units A, B and C, the filter units A, B and C are in progress of filtration of exhaust gas. The filter unit D is closed by a blind plate of the on-off valve, the filter unit D is heated to burn and remove particulate matter.

This embodiment is an example of the microparticle removal apparatus for a diesel truck having a displacement volume of 5L (liter). Corona discharge portions (22, 23) are provided as a charging element 24 upstream on a housing 1 and a filter portion downstream is made up of four (2×2) double coaxial cylinder-type filter units, thereby constituting one apparatus (Fig. 19). The filter unit is composed of an outer cylinder, an electric heater and an inner cylinder. Such a channel control is attained that a rotating slide-type on-off valve 5 located immediately in front of the filter portion is used to close any one of the four filter units, while the remaining three filter units are opened. The rotating slide-type on-off valve 5 is composed of a rotating slide-type circular plate 55 and a rotating slide-type on-off valve actuating mechanism 56.

The corona discharge portion is constituted with a coaxial cylindrical corona discharge tube in which eight circular tubes having an inner diameter of about 60 mm (0.06 m) are arranged parallel around one high-voltage supplying insulator for generating corona discharge and an electrode with a projection having an effective electrical discharge length of about 80 mm (0.08 m) (curvature radius of the leading end of the projection is 0.2 mm = 0.0002 m) is arranged on a central axis of each of the circular tubes. The circular tubes are of ground potential. A negative electrode-derived direct current voltage is applied to the electrode with the projection, thereby generating a negative corona discharge inside the circular tubes.

An exhaust temperature varies from about 70°C to 500°C (343 to 773K), depending on running conditions of the engine. Microparticles contained in exhaust gas also vary in concentration. Voltage-and current-characteristics of corona discharge are changed by the influence of the exhaust temperature and the concentration of microparticles. It is empirically acceptable that control is attained so that the applied voltage can be in a range of about 10 kV to 15 kV and the corona discharge current can be in a range of about 2 mA to 5 mA. Electricity used in corona discharge is about 50W.

A filter portion is composed of four double coaxial cylindrical-type filter units having the same configuration. One filter unit measures an outer diameter of about 80 mm (0.08 m), an inner diameter of about 15 mm (0.015 m) and a length of about 350 mm (0.35 m). A blanket composed of biodegradable fibers having a thickness of about 13 mm (0.013 m) and a bulk density of about 128 kg/m$^3$ (ISOFRAX (product name) available from UNIFRAX Corporation, USA) is used as a ceramic fiber filter.

In this example, a sheet-like blanket was rounded in a cylindrical shape and used. Instead, the blanket may be initially formed into a cylindrical shape.

The filter unit has a microparticle capturing area of about 0.1 m$^2$ per unit. The ceramic fiber filter is designed so that microparticle capturing faces oppose each other, with a clearance of 8 mm (0.008 m) kept. An electric heater composed of a coil-shaped nichrome wire is provided as a heating element on the clearance.

The nichrome wire is 0.7 mm (0.0007 m) in wire diameter, and the coil is about 5 mm (0.005 m) in coil diameter. The nichrome wire per filter unit is 0.6Ω in combined resistance. Direct-current voltage of 24V obtained by connecting in series two standard batteries to be installed on a vehicle can be applied to generate heat at about 1 kW.

Since one filter unit has about 0.1 m$^2$ of microparticle capturing area, the watt density (power density) at the time of heating is 10 kW/m$^2$.

The on-off valve 5 is of a rotating slide type. The valve is in contact with the partition 14 retaining the ends of the filter unit, and the rotating slide-type circular plate 55 is rotated by the rotating slide-type on-off valve actuating mechanism. This on-off valve 5 may also be actuated by an air cylinder or a gear mechanism.

In this embodiment as well, filter regeneration is carried out only in one filter unit. Filter units to be regenerated are changed sequentially, thereby making it possible to continuously clarify gas.

Fig. 20 and Fig. 21 briefly illustrate motions of the rotating slide-type on-off valve. The rotating slide-type on-off valve is provided with three circular opening portions 49 large enough to correspond to three gas inlets 17 of one filter unit at locations having central angles of 90°, 90° and 180°. Of four filter units, exhaust gases are allowed to flow only into three filter units (filtration), while no exhaust gas is allowed to flow into one filter unit (regeneration). The four filter units are given names of A, B, C and D to make explanation easy, for example, as illustrated in Fig. 20 and Fig. 21.

As illustrated in Fig. 20, the opening portion 49 of the rotating slide-type on-off valve coincides with flowing ports of A, B and D at a certain timing. In other words, a state is provided in which, of the four filter units of A, B, C and D, exhaust gas is allowed to flow into A, B and D, while no exhaust gas is allowed to flow into C. With this state kept, electricity is supplied to the electric heater of the filter unit C. The unit C is heated. Then, particulate matter Z (carbon microparticles) is burned. The particulate matter is eliminated and the filter unit C is regenerated.

In a subsequent timing, as illustrated in Fig. 21, the filter unit D is closed. Exhaust gas is filtered in the filter units, A, B and C, while the filter unit D is regenerated.

As described above, the rotating slide-type on-off valve is rotated by 1/4 every time, by which filter units to be regenerated are sequentially changed to A, B and C, etc. Therefore, a plurality of filter units are provided, thus making it possible to sequentially heat and regenerate the filter units, while exhaust gas is allowed to flow continuously.

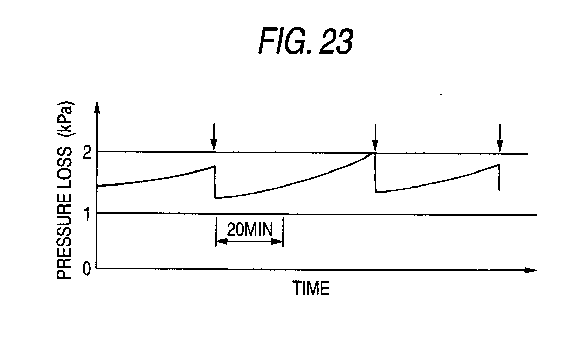

Fig. 23 shows an example where the above-constituted apparatus is used to remove microparticles contained in exhaust gas from a diesel truck (displacement volume 5L (liter), engine rotation of 2000 rpm) to measure the time-related change in pressure loss of the apparatus in its entirety.

In the above example, the rotating slide-type on-off valve is rotated at predetermined time intervals (about 40 minutes in this example) by control with a timer (at a timing given by the arrow in Fig. 23).

A temperature of exhaust gas is about 160°C, and one filter unit is heated and regenerated sufficiently at an electricity of 1 kW for about six minutes (average electricity consumption of about 150 W).

In a state that the rotating slide-type on-off valve is halted, the filter units capture microparticles to result in a gradual clogging and a subsequent increase in pressure loss. When the rotating slide-type on-off valve is rotated by 1/4, as described previously, exhaust gas starts to flow into a filter unit at which regeneration is completed. Therefore, found is a decrease in pressure loss which was temporarily increased.

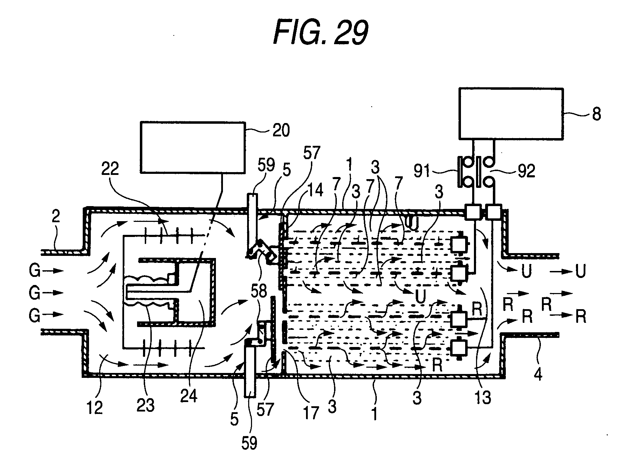

[Embodiment 6-4 (Fig. 29, Fig. 30, Fig. 31)]

Fig. 29, Fig. 30 and Fig. 31 show a fourth embodiment of the sixth invention. The structure is similar to that given in Fig. 19 to Fig. 21. The rotating slide-type on-off valve of Fig. 19 to Fig. 21 is replaced by independent on-off valves 5, 5 in each of the filter units. The on-off valve 5 is composed of a lid plate 57 which is in contact with or apart from a gas inlet at the partition 14, a link 58 for actuating the lid plate 57 and a driving stick 59 for rotating the link 58. More specifically, Fig. 29 illustrates a ninth constitution of the present invention, that is, the exhaust gas filtration apparatus in which a charging device is provided at a front stage of a channel of exhaust gas so that microparticles of exhaust gas can be electrically charged by corona discharge, two double-cylindrical filters composed of ceramic fibers are provided parallel to each other at a rear stage of a channel of exhaust gases so as to be parallel with the channel, an electric heater is provided between the respective inner and outer filters composed of ceramic fibers, and two on-off valves which open and close independently are provided at gas inlets of two filters. This is a sectional view showing a state in which the on-off valve is operated, one (lower) filter is used to flow electrically charged exhaust gas to the cylindrical ceramic fiber filter, filtering particulate matter, the other (upper) filter is blocked from the channel, supplying electricity to a heater, and particulate matter filtered and accumulated thereon is burned to regenerate the filter.

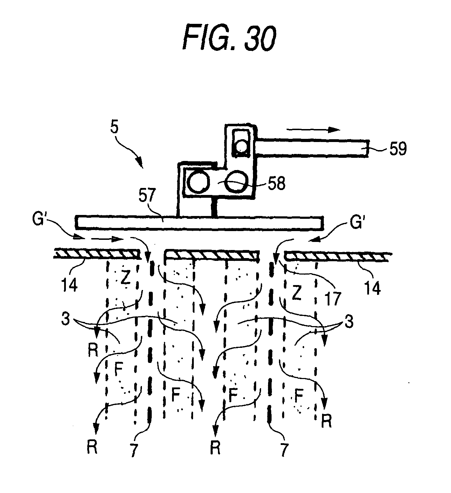

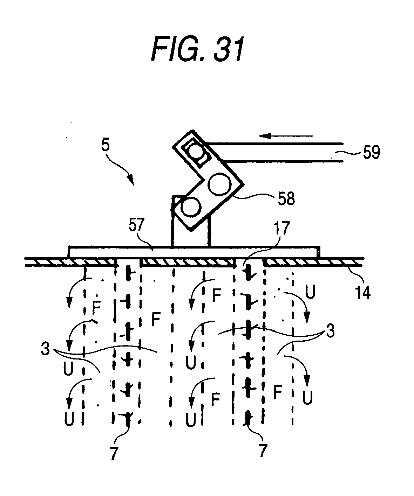

Fig. 30 is a drawing illustrating motions of an independent on-off valve in a ninth constitution of the present invention given in Fig. 29. The on-off valve is separated from a gas flowing port. The valve is opened, and exhaust gases are in progress of filtration. Fig. 31 is a drawing illustrating motions of an independent on-off valve in the ninth constitution of the present invention given in Fig. 29. A gas flowing port is closed by the on-off valve. The valve is closed, and heater is used to heat a filter to burn particulate matter, thereby carrying out regeneration of the filter.

In this embodiment, there is shown an on-off valve in which an air cylinder or a gear mechanism is used to move the driving stick 5 9 back and forth, thereby a temporary lid is placed on the gas flowing port of the filter unit.

Fig. 30 and Fig. 31 show graphically motions of the on-off valve 5.

Fig. 30 shows a state that the on-off valve 5 is opened. The driving stick 59 is pulled to the right. The lid plate 57 is pulled apart from the partition 14 by the link 58. The filter entry port 17 is opened. Electrically charged gas G' goes into the filter unit. Particulate matter is captured by the filter 3.

Fig. 31 shows a state that the on-off valve is closed. The driving stick 59 is pushed out to left. The lid plate 57 is pushed against the partition 14 by the link 58. The filter entry port 17 is closed. Electricity is supplied to the electric heater 7 to burn particulate matter.

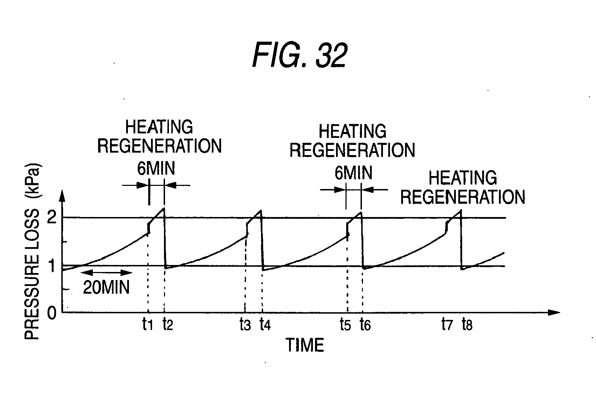

Fig. 32 shows an example where this apparatus is used to remove microparticles contained in exhaust gas from a diesel truck (displacement volume of 5L (liter), rotation of 2000 rpm) to measure the pressure loss of the apparatus in its entirety.

In the above example, four on-off valves of the filter units A, B, C and D are sequentially actuated at about 40 minute intervals.

Fig. 32 is a graph illustrating the result obtained by measuring the time-related change in pressure loss in the apparatus having four filter units. The horizontal axis indicates time, and the vertical axis indicates the pressure loss (kPa). As illustrated in Fig. 32, on-off valves 5 of all the filter units are opened until the time $t_1$, and exhaust gases are allowed to flow into all the filter units A, B, C and D. All the filter units A, B, C and D are in progress of gas clarification. Filters are gradually clogged to result in an increase in pressure loss.

At the time $t_1$, the on-off valve of the filter unit A is closed. Exhaust gases which flowed separately into four units until then flow only into the filter units B, C and D. There is found a temporary increase in the quantity of exhaust gas flowing into the three filter units. Exhaust gas flowing into the three filter units are increased in flow rate to result in a temporary increase in pressure loss of the apparatus in its entirety.

Electricity is supplied to an electric heater of the filter unit A which is closed between the time $t_1$ and $t_2$. Particulate matter (carbon microparticles) Z on the filter unit A is burned and removed. The burned gas U thereof is exhausted together with clarified gas R. The exhaust gas is heated and burned at a temperature of 160°C at a heater electricity of about 1kW (watt density, 10kW/m$^2$) for about six minutes, by which retained particulate matter Z is completely burned. Then, the filter unit A is regenerated.

At the time of $t_2$ when regeneration of the filter unit A is completed, electricity supplied to the electric heater of the filter unit A is halted. The on-off valve of the filter unit A is returned to the open state. No carbon microparticles (particulate matter) are found on the filter unit A. At the time of $t_2$, there is found an abrupt decrease in pressure loss of the apparatus in its entirety.

During the time of $t_2$ to $t_3$, exhaust gas G starts again to flow into all the filter units A, B, C and D. Then, clarified gas R is exhausted. Particulate matter Z accumulates on filter units to result in an increase in pressure loss.

At the time of $t_3$, the on-off valve of the filter unit B is closed. The pressure loss is further increased. Electricity is supplied to an electric heater of the filter unit B. Until the time of $t_4$, electricity is supplied to heat and burn particulate matter (carbon microparticles) of the filter unit B. Burned gas U is exhausted as clarified gas R. Regeneration is carried out in six minutes. At the time of $t_4$ when regeneration is completed, the on-off valve of the filter unit B is opened. Then, pressure loss is decreased.

During the time of $t_4$ to $t_5$, exhaust gases are again allowed to flow into all the filter units A, B, C and D. Particulate matter accumulates on the filter units to result in an increase in pressure loss. At the time of $t_5$, the on-off valve of the filter unit C is closed, and the heater of the filter unit C is used to heat, thereby regenerating the filter unit C. As described previously, regeneration is repeated sequentially for each filter unit. Since three filter units are opened, it is possible to clarify exhaust gases continuously.

In this embodiment, the timing of regenerating filter units is controlled by using a timer. It is also possible to control the timing by using a micro-computer with reference to a running state of the engine, the history thereof and the temperature of exhaust gas.

Further, where exhaust gas is high in temperature to require a smaller extent of elevating temperatures necessary for heating and burning particulate matter captured on filters, the electric heater may be controlled by switching on and off or adjusting an electric current, thereby the heating energy may be appropriately adjusted.

Still further, there is a case where oxygen necessary for heating, burning and removing particulate matter may be short depending on a running state of the diesel engine or a quantity of the particulate matter accumulated on filters. In this case, it is acceptable that oxygen is supplied while exhaust gas is allowed to flow slightly, with the on-off valve being adjusted for the opening so as not to close the valve completely or an ambient air is introduced to carry out heating, burning and regeneration. There is another method in which the valve of a filter unit, the on-off valve of which is once closed, is temporarily opened to exchange gas inside the filter unit, thereby oxygen is supplied and the on-off valve is again closed to carry out the heating, burning and removal.

In general, in an operational state at which oxygen is quite thin in concentration, exhaust gas is higher in temperature to justify a smaller extent of temperature elevation. Further, required is only a shorter heating time in the present invention, thus making it possible to regenerate filters economically even under the above-described operational state.

**Claims**

1. A particulate matter removal apparatus comprising:

   a breathable filter material including heat-insulating ceramic fibers, provided on a channel of exhaust gases containing particulate matter to capture the particulate matter;
   a heat insulating material arranged in close proximity to the particulate matter capturing face of the breathable filter material;
   a heating element which is arranged between the breathable filter material and the heat insulating material to heat, burn and remove the particulate matter captured by the filter material; and
   an on-off valve which operates the inflow of exhaust gases into the breathable filter material;

   wherein when the on-off valve is opened, the breathable filter material is not heated but the breathable filter material is allowed to capture particulate matter, and when the on-off valve is closed and the breathable filter material is restricted for inflow of gases, the breathable filter material is heated by the heating element to burn and remove particulate matter captured by the breathable filter material.

2. A particulate matter removal apparatus comprising:

   a breathable filter material including heat-insulating ceramic fibers, provided on a channel of exhaust gases containing particulate matter to capture the particulate matter;
   a heating element which is arranged in close proximity to the particulate matter capturing face of the breathable filter material to heat, burn and remove the particulate matter captured by the breathable filter material; and
   an on-off valve which controls the inflow of exhaust gases into the breathable filter material;

   wherein two or more of the breathable filter materials are arranged in close proximity, with the particulate matter capturing faces opposing each other, the heating element is arranged between the particulate matter capturing faces of the breathable filter materials arranged in close proximity, when the on-off valve is opened, the breathable filter material is not heated but the breathable filter material is allowed to capture particulate matter, and when the on-off valve is closed and the breathable filter material is restricted for inflow of gases, the breathable filter material is heated by the heating element to burn and remove particulate matter captured by the breathable filter material.

3. A particulate matter removal apparatus as set forth in Claim 1 or Claim 2, further comprising:

   a charging element which is to electrically charge particulate matter upstream on the breathable filter material.

4. A particulate matter removal apparatus as set forth in any one of Claim 1 to Claim 3, wherein a ratio of heat conductivity k (unit, W/mK) of breathable filter material including ceramic fibers to thickness d (unit, m), that is, k/d (obtained by dividing the heat conductivity by the thickness; unit, $W/m^2K$) is $50W/m^2K$ or less and a product $\rho cd$ (unit, $J/m^2K$) obtained by multiplying the bulk density $\rho$ (unit, $kg/m^3$) of breathable filter material by the specific heat c (unit, J/kgK) and by the thickness d (unit, m) satisfies the following formula

$$\rho cd \leq 600(k/d)/\{-\ln(1-0.019k/d)\}$$

(ln is a natural logarithm).

5.  A particulate matter removal apparatus as set forth in any one of Claim 1 to Claim 3, wherein a ratio of heat conductivity k (unit, W/mK) of breathable filter material including ceramic fibers to thickness d (unit, m), that is, k/d (obtained by dividing the heat conductivity by the thickness; unit, $W/m^2K$) is 20 $W/m^2K$ or less and a product $\rho cd$ obtained by multiplying the bulk density $\rho$ (unit, $kg/m^3$) of breathable filter material by the specific heat c (unit, J/kgK) and by the thickness d (unit, m) satisfies the following formula

$$\rho cd \leq 600(k/d)/\{-\ln(1-0.0475k/d)\}$$

(ln is a natural logarithm).

6.  A particulate matter removal apparatus as set forth in any one of Claim 1 to Claim 5, wherein compositions of a breathable filter material including ceramic fibers are biodegradable fibers primarily based on silicon dioxide (silica: $SiO_2$) magnesium oxide (magnesia: MgO), calcium oxide (calcia: CaO).

7.  A particulate matter removal apparatus as set forth in any one of Claim 1 to Claim 6, wherein said particulate matter removal apparatus has two or more of combinations of an on-off valve and a breathable filter material and also controls the opening and closing actions of each on-off valve so that at least one of the on-off valves is opened while exhaust gases are supplied.

## FIG. 1

## FIG. 2

# FIG. 3

# FIG. 4

## FIG. 5

# FIG. 6

## FIG. 7

# FIG. 8

## FIG. 9

# FIG. 10

## FIG. 11A

## FIG. 11B

# FIG. 12

# FIG. 13

## FIG. 14

# FIG. 15

# FIG. 16

# FIG. 17

# FIG. 18

# FIG. 19

## FIG. 20

FIG. 21

FIG. 22

## FIG. 23

## FIG. 24

GAS FLOW

GAS FLOW

## FIG. 25

GAS FLOW

GAS FLOW

## FIG. 26

FIG. 27

*FIG. 28*

## FIG. 29

FIG. 30

## FIG. 31

## FIG. 32

## FIG. 33

## FIG. 34

## FIG. 35

**European Patent Office**

**EUROPEAN SEARCH REPORT**

Application Number

EP 07 01 7598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 93/00503 A (DONALDSON CO INC [US]) 7 January 1993 (1993-01-07) * the whole document * | 2,3,6,7 | INV. F01N3/027 |
| X | EP 0 924 398 A (SUMITOMO ELECTRIC INDUSTRIES [JP]) 23 June 1999 (1999-06-23) * the whole document * | 2,3,6,7 | |
| A | EP 0 606 071 A (SUMITOMO ELECTRIC INDUSTRIES [JP]) 13 July 1994 (1994-07-13) * the whole document * | 1,2 | |
| A | US 2005/284139 A1 (VERKIEL MAARTEN [US] ET AL VERKIEL MAARTEN [US] ET AL) 29 December 2005 (2005-12-29) * figures 3-6 * | 1,2 | |

TECHNICAL FIELDS SEARCHED (IPC)

F01N

The present search report has been drawn up for all claims

| Place of search | Date of completion of the search | Examiner |
|---|---|---|
| Munich | 3 December 2007 | Hilt, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

# EP 1 898 060 A1

## ANNEX TO THE EUROPEAN SEARCH REPORT
## ON EUROPEAN PATENT APPLICATION NO.

EP 07 01 7598

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2007

| Patent document cited in search report | | Publication date | Patent family member(s) | | Publication date |
|---|---|---|---|---|---|
| WO 9300503 | A | 07-01-1993 | AU | 2246092 A | 25-01-1993 |
| | | | US | 5293742 A | 15-03-1994 |
| | | | ZA | 9203060 A | 28-10-1993 |
| EP 0924398 | A | 23-06-1999 | CA | 2250629 A1 | 19-06-1999 |
| | | | JP | 11182232 A | 06-07-1999 |
| | | | US | 6120583 A | 19-09-2000 |
| EP 0606071 | A | 13-07-1994 | DE | 69402437 D1 | 15-05-1997 |
| | | | DE | 69402437 T2 | 04-12-1997 |
| | | | JP | 6257422 A | 13-09-1994 |
| | | | US | 6024927 A | 15-02-2000 |
| US 2005284139 | A1 | 29-12-2005 | DE | 102005019819 A1 | 19-01-2006 |
| | | | JP | 2006009802 A | 12-01-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006242357 A
- JP 2005337153 A

- JP H08312329 A